# EUROPEAN PATENT SPECIFICATION

(11) **EP 1 908 141 B1**
(45) Date of publication and mention of the grant of the patent: **17.08.2016**
(21) Application number: 06781045.7
(22) Date of filing: 06.07.2006
(51) Int. Cl.: H01M 8/1027, B29C 41/28, H01B 1/12, H01M 8/1032, B01D 67/00, B01D 69/06, B01D 71/42, B01D 71/68, B01D 71/82, H01M 8/1039, H01M 8/1081, H01M 8/1086, B29K 81/00

(54) **METHOD FOR PRODUCING A SOLID ELECTROLYTE MEMBRANE**
VERFAHREN ZUR HERSTELLUNG EINER FESTELEKTROLYTMEMBRAN
PROCÉDÉ DE PRODUCTION D'UNE MEMBRANE À ELECTROLYTE SOLIDE

(30) Priority: 07.07.2005 JP 2005198374; 29.03.2006 JP 2006089813
(43) Date of publication of application: 09.04.2008
(73) Proprietor: FUJIFILM CORPORATION, Minato-ku Tokyo 106-8620 (JP)
(72) Inventor: TAKEDA, Ryo, Fuji Film Corporation, Minami-ashigara-shi, Kanagawa 250-0193 (JP); MIYACHI, Hiroshi, Fuji Film Corporation, Minami-ashigara-shi, Kanagawa 250-0193 (JP)
(74) Representative: Grünecker Patent- und Rechtsanwälte PartG mbB
(86) International application number: PCT/JP2006/313925
(87) International publication number: WO 2007/007824

(56) References cited:
- EP-A1- 1 304 754
- WO-A1-02/25764
- JP-A- 2004 066 136
- JP-A- 2004 178 995
- JP-A- 2005 146 018
- JP-A- 2005 171 025
- JP-A- 2005 235 466
- JP-A- 2005 310 643
- US-A- 4 840 733
- US-A1- 2003 173 703
- US-A1- 2004 030 005

## Description

### Technical Field

The present invention relates to a method for producing a solid electrolyte membrane, and more particularly, the present invention relates to a method for producing a proton-conductive solid electrolyte membrane.

### Background Art

Recently, active research has been directed to lithium ion batteries and fuel cells used as power sources for mobile appliances, and solid electrolyte membranes constituting the above batteries and the cells. The solid electrolyte membranes are, for instance, lithium ion conductive materials and proton conductive materials.

In general, a polymer of a membrane-form is used as the proton conductive material. The polymer membrane (hereinafter referred to as a membrane) used as the proton conductive material and the producing method thereof are suggested. Japanese Patent Laid-Open Publication No. 9-320617 suggests a method in which polyvinylidene fluoride resin is immersed into a liquid mixture of an electrolyte and a plasticizer. Japanese Patent Laid-Open Publication No. 2001-307752 suggests a producing method of a proton conductive membrane by synthesizing an inorganic compound in a solution containing aromatic polymer having sulfonic acid group, and then removing the solvent. In this method, oxides of silicon and phosphoric acid derivative are added to improve shapes and conditions of micropores. Japanese Patent Laid-Open Publication No. 2002-231270 suggests a method for producing an ion exchange membrane by adding metal oxide precursor to a solution containing ion exchange resin, and then casting a liquid obtained by hydrolysis and polycondensation of the precursor. Japanese Patent Laid-Open Publication No. 2004-79378 suggests a producing method of the proton conductive membrane. First, a membrane having proton conductivity is produced by a solution casting method. To produce the proton conductive membrane, the membrane is immersed in a water soluble organic compound solution whose boiling point is not less than 100° C to reach equilibrium swelling, and then the water is evaporated by heating. Japanese Patent Laid-Open Publication No. 2004-131530 suggests a producing method of a solid electrolyte membrane by dissolving a compound whose main component is polybenzimidazole having negative ionic group in an alcoholic solvent containing tetraalkylammonium hydroxide and whose boiling point is not less than 90° C. Japanese Patent Laid-Open Publication No. 2005-146018 suggests a producing method of the proton conductive membrane. In this method, a coating liquid containing (a) a polymer containing ion conductive component, (b) a water-soluble organic compound whose molecular weight is less than 1000 or a water-soluble inorganic compound and (c) an organic solvent is applied to a substrate. Then, a dry coating layer is formed by removing (c) the organic solvent. Thereafter, the proton conductive membrane is produced by removing (b) the water-soluble compound.

As the membrane forming method, there are a melt extrusion method and a membrane casting method. In the former method, the membrane is produced without using the solvent. However, the polymer is denatured due to heating, and impurities in the polymer material remains in the membrane. On the other hand, the latter method requires a large sized facility including a producing apparatus of the solution which is called a dope, a solvent recovery device and the like. However, the latter method only requires low heating temperature, and enables to remove the impurities in the polymer material. Furthermore, in the latter method, a membrane with superior flatness and smoothness is produced compared to that produced by the former method.

The solution casting method is constituted of a dope production process and a membrane production process. In the dope production process, a mixture containing a polymer which is a solid electrolyte, a solvent and an additive is prepared. The mixture is heated and filtered to obtain the dope. In the membrane production process, a casting dope is prepared by mixing and stirring the dope and the predetermined additive. Then, the casting dope is cast onto a support to produce the casting membrane (hereinafter referred to as a casting process). To evaporate the solvent in the casting membrane, the casting membrane is dried on the support (hereinafter referred to as a casting membrane drying process). After the casting membrane has a self-supporting property, the casting membrane is peeled off from the support as a membrane. The membrane is dried (hereinafter referred to as a membrane drying process), and wound.

The solvent of the solid electrolyte is likely to be a basic substance having a large polarity which easily reacts with the protons. If the membrane having the remaining basic substance(s) is used for the fuel cell, the basic substances interfere the passing of the protons through the solid electrolyte membrane so that the proton conductivity is lowered. Accordingly, the sufficient electromotive force cannot be exerted as the fuel cell. In the solution casting method, the casting membrane and the membrane are dried in order to remove the solvents contained therein. However, the solvent of the solid electrolyte generally has a high boiling point. For that reason, it is extremely difficult to form the membrane with no solvent residue.

In Japanese Patent Laid-Open Publication No. 9-320617, the solution casting method is rejected, but the problem of remaining impurities contained in the raw material in the membrane is not solved. The producing methods disclosed in Japanese Patent Laid-Open Publications No. 2001-307752, 2002-231270, 2004-79378, and 2004-131530 are for small-scale productions and not for large scale manufactures. The method disclosed in Japanese Patent Laid-Open Publication No. 2001-307752 has a problem in that dispersion of complex made of a polymer and an inorganic solvent are difficult. The method disclosed in Japanese Patent Laid-Open Publication No. 2002-231270 has a problem in that the membrane production process is complicated. The method disclosed in Japanese Patent Laid-Open Publication No. 2004-79378 has a problem in that micropores are formed on the membrane by immersing the membrane in the water. As a result, the uniform membrane is not obtained. A method for solving the above problem is not disclosed. Further, the above reference cites that the method enables to produce various kinds of solid electrolyte membranes. However, concrete disclosures are not given. In Japanese Patent Laid-Open Publication No. 2004-131530, the materials to be used are limited so that other superior materials cannot be used.

According to the method suggested in Japanese Patent Laid-Open Publication No. 2005-146018 drying time of the casting membrane is long. As a result, to apply the invention to the continuous production, either of options (1) an elongated support or (2) a low transportation speed of the support should be selected. The option (1) results in upsizing of the facility, and (2) reduces production efficiency of the membrane. Accordingly, the method is not suitable for the continuous production. The method disclosed in Japanese Patent Laid-Open Publication No. 2005-146018 in which the coated membrane containing (a) to (c) is dried to remove (b), a boiling point of (b) is generally high. For that reason, it is not easy to remove (b) by drying. That is, the above method does not solve the difficulty in removing the organic solvent with the high boiling ) point by drying.

An object of the present invention is to produce a solid electrolyte membrane with excellent proton conductivity in a continuous membrane form with constant quality. Said object is achieved by the method of appended claim 1.

### Disclosure of invention

The method for producing a solid electrolyte membrane of the present invention comprises the steps of:
(A) forming a casting membrane by casting a dope containing a solid electrolyte and an organic solvent onto a moving support;
(B) peeling said casting membrane from said support as a wet membrane containing said organic solvent;
(C) contacting said wet membrane with a liquid which is a poor solvent of said solid electrolyte and having a lower boiling point than that of said organic solvent, said poor solvent being selected from a lower alcohol having 1 to 5 carbons, methyl acetate and acetone so that no pores are formed in the membrane; and
(D) drying said wet membrane to form a solid electrolyte membrane;
wherein said organic solvent is a mixture of a first component which is a poor solvent of said solid electrolyte, and a second component which is a good solvent of said solid electrolyte, wherein the poor solvent is selected from a lower alcohol having 1 to 5 carbons, methyl acetate or acetone and the good solvent is selected from N-dimethylformamide (DMF), N,N'-dimethylacetamide (DMAc), dimethyl sulfoxide (DMSO) or N-methylpyrrolidone (NMP),
wherein the weight ratio of said first component to said organic solvent is not less than 10% and less than 100%, and
wherein said step (C) is performed multiple times before said step (D) by immersing said wet membrane in said liquid, wherein the liquid in the second step (C) includes a compound having a lower boiling point than that of the liquid in the first step (C) and wherein said liquids are stored in liquid baths and the temperatures of the liquids in the first and second steps (C) are controlled in the range of 10 to 80°C.

In a preferred embodiment, the first component of the organic solvent includes alcohol having one to five carbons, and the second component includes dimethylsulfoxide.

The solid electrolyte is preferably a hydrocarbon polymer.

The hydrocarbon polymer is preferably an aromatic polymer having a sulfonic acid group.

The aromatic polymer is preferably a copolymer represented by a general formula shown in a chemical formula 1. 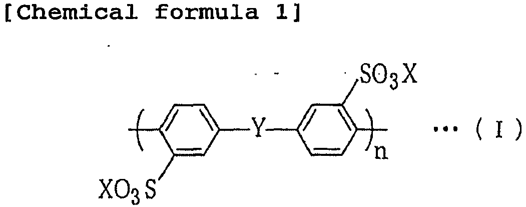 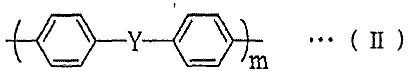 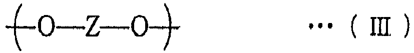 (X is H or a monovalent cation species, Y is SO₂, Z is a structure shown in (IV) or (v) in a chemical formula 2, n and m satisfy 0.1 ≤ n/(m+n) ≤ 0.5)

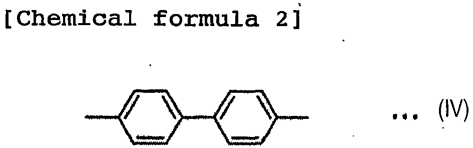

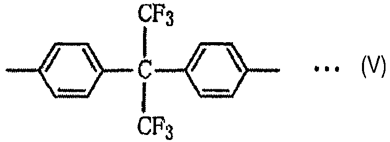

The method of the present invention can be carried out in an apparatus constituted of a casting device for casting a dope containing a solid electrolyte and an organic solvent from a casting die onto a moving support to form a casting membrane, a peeling device for peeling the casting membrane from the support as a wet membrane containing an organic solvent, a membrane wetting device for contacting a liquid which is a poor solvent of the solid electrolyte and having a lower boiling point than that of the organic solvent with at least one of the casting membrane and the wet membrane, and a drying device for drying the wet membrane to form a solid electrolyte membrane.

According to the present invention, a solid electrolyte membrane having a uniform quality and excellent ion conductivity is continuously produced. When the solid electrolyte membrane produced according to the present invention is used in a fuel cell, the fuel cell exerts the excellent electromotive force. In specific, according to the method of the present invention, the step (C) is established between the step (A) and the step (D), the organic solvent and the poor solvent of the organic solvent is evaporated and securely removed from the membrane in the step (D). In the present invention, the casting membrane is dried by blowing the dry air onto the casting membrane. Thereafter, the membrane containing the remaining solvent of equal to or less than a predetermined value is immersed in the liquid formed of the poor solvent of the solid electrolyte. Thereby, the generation of micropores due to the immersion is prevented which solves the problem of Japanese Patent Laid-Open Publication No. 2004-79378. In the present invention, in the step (D), it becomes possible to remove the organic solvent as the mixture having the lower boiling point than that of organic solvent. Accordingly, the problem indicated in Japanese Patent Laid-Open Publication No. 2005-146018 is solved. Further, to remove the basic substances, a method in which the basic segment is substituted by protons by a pretreatment such as acid processing, for instance, neutralization is used. However, such pretreatment is unnecessary in the present invention. The present invention is capable of securely removing the organic solvent together with the poor solvent by contacting the organic solvent contained in the membrane with the poor solvent of the solid electrolyte and then drying the membrane.

Further, since the step (D) is established after the step (C), the organic solvent together with the poor solvent are securely removed in the step (D). Since the liquid is formed of at least one type of compound, it becomes possible to prepare the liquid suitable for the substitution of the organic solvent contained in the membrane. Moreover, since the step (C) is performed for plural times, the organic solvent is more securely removed from the membrane. Further, by immersing the membrane in the liquid in the step (C), the organic solvent is efficiently removed in a short time.

### Brief Description of Drawings

Fig. 1 is a schematic view illustrating an apparatus used for carrying out the method of the present invention;
Fig. 2 is a schematic view illustrating a first example of the membrane producing apparatus;
Fig. 3 is a schematic view illustrating a second example of the membrane producing apparatus;
Fig. 4 is section view illustrating a configuration of a membrane electrode assembly;
Fig. 5 is an exploded section view illustrating a configuration of a fuel cell; and
Fig. 6 is a schematic view illustrating a third example of the membrane producing apparatus.

### Best Mode for Carrying Out the Invention

Hereinafter the embodiments of the present invention are described in detail.

### [Materials]

In the present invention, a polymer having a proton donating group is used as a solid electrolyte to form a membrane. A producing method thereof will be described later. The polymer having the proton donating group is not particularly limited. Any known polymer used as the proton conductive material having the acid residue is preferably used, for instance, polymer compounds formed of addition polymerization having the sulfonic acid in the side chains, poly(meth)acrylate having side chains of phosphoric acid groups, sulfonated poly ether ether ketone which is a sulfonated compound of poly ether ether ketone, sulfonated polybenzimidazole, sulfonated polysulfone which is a sulfonated compound of polysulfone, sulfonated compound of heat-resistant aromatic polymer compounds and so forth. As addition polymerization polymer having sulfonated acid in the side chain, there are perfluorosulfonic acid polymer such as typically Nafion (registered trademark), sulfonated polystyrene, sulfonated polyacrylonitrile-styrene,and sulfonated polyacrylonitrile butadiene-styrene. As sulfonated compound of the heat-resistant aromatic polymer compound, there are sulfonated polyimide.

As preferable examples of the perfluorosulfonic acid, for instance, the substances disclosed in, for instance, Japanese Patent Laid-Open Publications No. 4-366137, 6-231779 and 6-342665 are used. Especially, the substance shown in Chemical formula 3 shown below is preferable. In the Chemical formula 3, m is in a range of 100 to 10000, preferably in a range of 200 to 5000, and more preferably in a range of 500-2000. In addition, n is in a range from 0.5 to 100, and especially preferable in a range of 5 to 13.5. Further, x is approximately equal to m, and y is approximately equal to n.

### [Chemical formula 3]

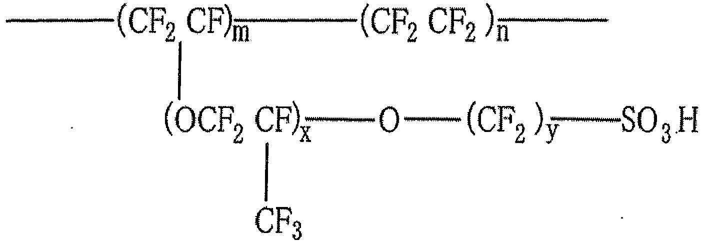

Preferable examples of sulfonated polystyrene, sulfonated polyacrylonitrile styrene and sulfonated polyacrylonitrile-butadiene-styrene are substances disclosed in Japanese Patent Laid-Open Publication Nos. 5-174856 and 6-111834, and the substance shown below in Chemical formula 4.

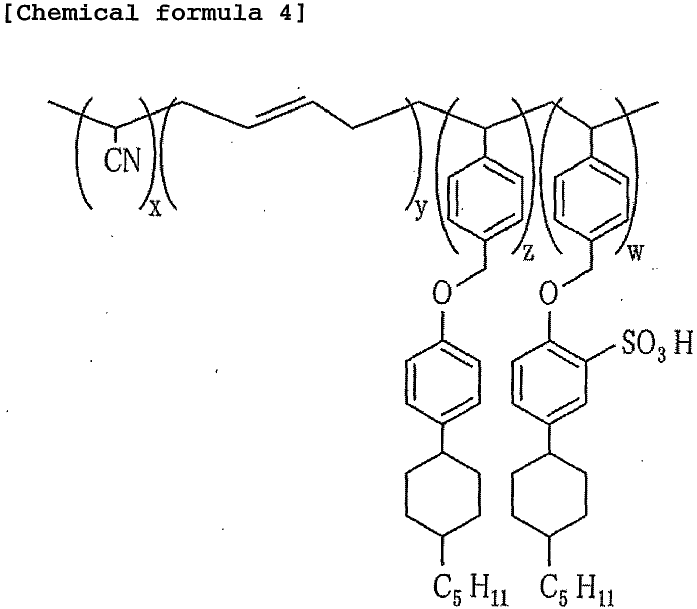

Preferable examples of the sulfonated compound of the heat-resistant aromatic polymer are substances disclosed in, for instance, Japanese Patent Laid-Open Publication Nos. 6-49302, 2004-10677, 2004-345997, 2005-15541, 2002-110174, 2003-100317, 2003-55457, 9-345818, 2003-257451 and 2002-105200, and PCT Publication No. WO/97/42253 (corresponding to Japanese Patent Publication of translated version No. 2000-510511). Among the above examples, the substances shown in the above Chemical formula 1, and those shown in Chemical formula 5 and Chemical formula 6 below are especially preferable.

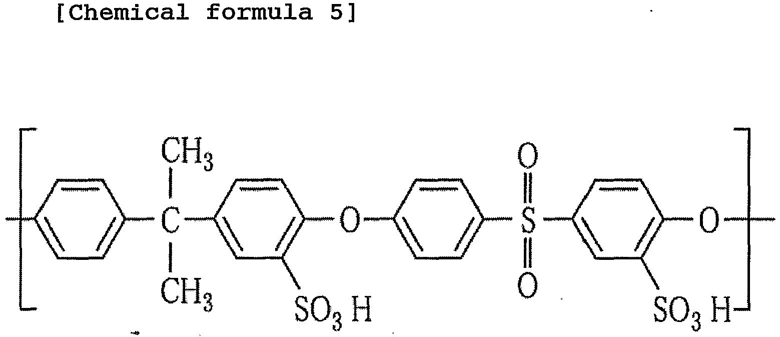

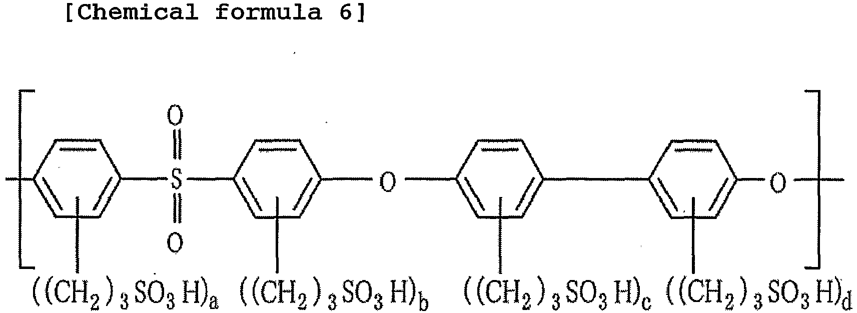

Particularly, in a membrane formed of the substance shown in the chemical formula 1, a membrane expansion coefficient by water absorption is compatible with the proton conductivity. In the case n /(m+n)<0.1, the amount of the sulfonated acid groups may be too low for forming a path for transporting the protons, that is, the proton channel. As a result, the obtained membrane may not exert the sufficient proton conductivity for a practical use. In the case n /(m+n) > 0.5, the water absorption of the membrane becomes excessively higher which result in higher membrane expansion coefficient by the water absorption. As a result, the membrane is easily degraded.

The sulfonated reaction in the process for obtaining the above compounds is performed through the various synthesis methods disclosed in known references. As sulfonating agents, sulfuric acid (concentrated sulfuric acid), fuming sulfuric acid, sulfur trioxide (in a gas or liquid), sulfur trioxide complex, amidosulfuric acid, and chlorosulfonic acid are used. As the solvent, hydrocarbons (benzene, toluene, nitrobenzene, chlorobenzene, or dioxetan), and halogenated alkyls (dichloromethane, trichloromethane, dichloroethane, or tetrachloromethane are used. Reaction temperature is determined in a range of -20° C to 200° C according to activity of the sulfonating agent. In addition, it is also possible to use other methods. For instance, mercapto group, disulfide group or sulfinic acid group is previously introduced to a monomer to synthesize the sulfonated compound by oxidation with an oxidizer. As the oxidizer, hydrogen peroxide, nitric acid, bromine water, hypochlorous acid salt, hypobromite salt, potassium permanganate, or chromic acid are used. As the solvent, water, acetic acid, or propionic acid are used. The reaction temperature in the above method is determined in a range of room temperature (for instance, 25°C) to 200°C according to the activity of the oxidizer. In another method, halogeno-alkyl group is previously introduced to the monomer to synthesize the sulfonated compound by substitution of sulfite salt acid salt, or hydrogen sulfite salt. As the solvent, water, alcohols, amides, sulfoxides, or sulfones are used. The reaction temperature is determined in a range of the room temperature (for instance 25°C) to 200°C. It is also possible to use a mixture of two or more solvents as the solvent for the above sulfonation reaction.

Further, it is also possible to use alkyl sulfonating agent in the reaction process to produce the sulfonated compounds. One of the common methods is Friedel-Crafts Reaction (see Journal of Applied Polymer Science, Vol. 36, 1753-1767, 1988) using sulfone and AlCl₃. When the alkyl sulfonating agent is used to carry out the Friedel-Crafts Reaction, the following substances are usable as the solvent: hydrocarbon (benzene, toluene, nitrobenzene, acetophenon, chlorobenzen, or trichlorobenzene ), or alkyl halide (dichloromethane, trichloromethane, dichloroethane, tetrachloromethane, trichloroethane, or tetrachloroethane. The reaction temperature is determined at a range of the room temperature to 200°C. It is also possible to use the mixture of two or more solvents are mixed.

To produce the solid electrolyte membrane having the structure of the chemical formula 1, it is also possible to carry out the sulfonation in a membrane production process which will be described later. That is, a dope is prepared containing a polymer whose X in the chemical formula 1 is cation species other than a hydrogen atom H (hereinafter referred to as a precursor). The dope is cast onto a support and then peeled off as a membrane containing the precursor (hereinafter referred to as a precursor membrane). By substituting the hydrogen atom H for X in the precursor membrane, that is, the proton substitution, it becomes possible to produce the solid electrolyte membrane constituted of a polymer having the structure shown in the chemical formula 1.

The cation species is an atom or an atomic group which generates cation (s) at the time of ionization. The ion generated from the cation species may have a valence of one or more. As the cation, alkali-metal cation, alkali earth metal cation and ammnonium cation are preferable in addition to proton, and calcium ion, barium ion, quaternary ammonium ion, lithium ion, sodium ion, potassium ion are more preferable. The membrane obtains the function as the solid electrolyte even if the substitution of the hydrogen atom for the cation species (X) in the chemical formula 1 is not performed. However, the proton conductivity of the membrane increases as the percentage of the substitution of H for X (the cation species) increases. For that reason, it is especially preferable to substitute H for X.

It is preferable to use the solid electrolyte having the following properties. The proton conductivity is preferably not less than 0.005 S/cm and more preferably not less than 0.01 S/cm at the temperature of, for instance, 25°C, and the relative humidity of, for instance, 70%. Further, the proton conductivity after immersing the membrane in 50% methanol water solution for one day at the temperature of 18°C is preferably not less than 0.003 S/cm, and more preferably not less than 0.008 S/cm. In particular, it is preferable that a percentage of reduction in the proton conductivity of the membrane after the immersion compared to that before the immersion is not more than 20%. Methanol diffusivity is preferably not more than 4 × 10⁻⁷ cm²/sec, and especially preferably not more than 2 × 10⁻⁷ cm²/sec.

As the strength of the membrane, elastic modulus is preferably not less than 10 MPa, and more preferably not less than 20 MPa. Measuring methods of the elastic modulus are disclosed in a paragraph [0138] of Japanese Patent Laid-Open Publication No. 2005-104148. The above preferable values are obtained by using a tensile testing device produced by Toyo Baldwin Co. Ltd. If other measuring method and/or other tensile testing device are used, correlation between the obtained value and the reference value obtained by using the above tensile testing device should be previously calculated.

As the durability, between before and after a test with time in which the membrane is immersed in 50% methanol solution at a constant temperature, a percentage of a change in each of weight, ion exchange capacity, and methanol diffusivity is preferably not more than 20%, and more preferably not more than 15%. Further, in a test with time in hydrogen peroxide, a percentage of a change in each of weight, ion exchange capacity, methanol diffusivity is preferably not more than 20%, and more preferably not more than 10%. The volume swelling ration of the membrane in 50% methanol at the constant temperature is preferably not more than 10% and more preferably not more than 5%.

The membrane with stable water absorption ratio and stable moisture content is preferable. It is preferable that the membrane has extremely low solubility in the alcohols, water or mixture of alcohol and water to the extent that it is practically negligible. It is also preferable that the decrease of the membrane weight and changes in shapes and conditions of the membrane when the membrane is immersed in the above liquid is extremely small to the extent that it is practically negligible.

The ion conductivity property of the solid electrolyte membrane is represented by an index which is a ratio of the ion conductivity to the methanol transmission coefficient. The higher the index in a certain direction, the higher the ion conductive property becomes in such direction. In the thickness direction of the solid electrolyte membrane, the ion conductivity increases proportional to the thickness while the methanol permeability increases inversely proportional thereto. Accordingly, the ion conductive property of the solid electrolyte membrane is controlled by changing the thickness. In the solid electrolyte membrane used for the fuel cells, since the anode is provided on one side of the solid electrolyte membrane and the cathode is provided on the other side of the solid electrolyte membrane, it is preferable that the index in the membrane thickness direction is larger than that in other directions. The thickness of the solid electrolyte membrane is preferably in a range of 10 *µ*m and 300 *µ*m. If, for instance, both the ion conductivity and the methanol diffusion coefficient are high in the solid electrolyte, it is especially preferable to produce the membrane with a thickness of 50 *µ*m - 200 *µ*m. If, for instance, both the ion conductivity and the methanol diffusion coefficient are low in the solid electrolyte, it is especially preferable to produce the membrane with a thickness of 20 *µ*m - 100 *µ*m.

Heat resistant temperature is preferably not less than 200°C, more preferably not less than 250°C and especially preferably not less than 300°C. The heat resistant temperature means the temperature at which a decrease in the membrane weight reaches 5% when the heat is increased at the measure of 1° C/min. The decrease in the membrane weight does not include an amount of moisture and the like evaporated from the membrane.

When the solid electrolyte is formed in the membrane form and used for the fuel cell, the maximum power density thereof is preferably 10 mW/cm² or more.

By using the above-mentioned solid electrolyte, a solution suitable for the membrane production is produced, and accordingly, the solid electrolyte membrane suitable for producing the fuel cell is produced. The solution suitable for the membrane production is, for instance, a solution whose viscosity is relatively low, and from which foreign matters are easily removed through filtration. The obtained solution is referred to as a dope in the following descriptions.

As the solvent for the dope, an organic solvent which is a mixture of a first component which is a poor solvent of the solid electrolyte, and a second component which is a good solvent of the solid electrolyte is used. The poor solvent is selected from a lower alcohol having 1 to 5 carbons, methyl acetate or acetone and the good solvent is selected from N-dimethylformamide (DMF), N,N'-dimethylacetamide (DMAc), dimethyl sulfoxide (DMSO) or N-methylpyrrolidone (NMP).

If the proton substitution is carried out in a production of the solid electrolyte membrane having the structure shown in the Chemical formula 1, it is preferable to use a good solvent and a poor solvent of the precursor of the solid electrolyte. The solvent and the solid electrolyte are mixed such that the solid electrolyte constitutes 5 wt. % of the whole weight. Wether the solvent used is the poor solvent or the good solvent of the solid electrolyte is determined by the amount of the insoluble residues. The good solvent of the solid electrolyte in which the solid electrolyte is dissolved has a relatively high boiling point compared to the commonly used compounds. On the other hand, the poor solvent has a relatively low boiling points compared to the commonly used compounds. Accordingly, by mixing the poor solvent to the good solvent, the boiling point of the mixture in which the solid electrolyte is dissolved is lowered. As a result, efficiency and effect in removing the solvent during the membrane production process is improved. In particular, the drying efficiency of the casting membrane is significantly improved.

In the mixture of the good solvent and the poor solvent, the weight ratio of the poor solvent is not less than 10% and less than 100%, and preferably (weight of the good solvent) : (weight of the poor solvent) is in a range of 90:10 to 10:90. Thereby, the percentage of the component with the low boiling point increases in the total weight of the solvents. Accordingly, the drying efficiency and the drying effects are further improved during the producing process of the solid electrolyte membrane.

As the good solvent, DMF, DMAc, DMSO and NMP are used. Among the above, DMSO is especially preferable in terms of safety and relatively low boiling point. As the poor solvent, lower alcohol having 1 to 5 carbons, methyl acetate and acetone are used. Among the above, the lower alcohol having 1 to 3 carbons are more preferable. If the DMSO is used as the good solvent, methyl alcohol is especially preferable in terms of excellent solubility in the DMSO.

To improve various membrane properties of the solid electrolyte membrane, additives are added to the dope. As the additives, antioxidant agents, fibers, fine particles, water absorbing agents, plasticizers, and solubilizers are used. A ratio of the additives is preferably in a range of 1 wt.% to 30 wt. % when the whole solid component in the dope is 100 wt.%. The ratio and the sorts of the additives should not adversely affect the proton conductivity. The additives will be described in the following.

As the antioxidant agent, for instance, compounds such as hindered phenols, monovalent or divalent sulfers, trivalent phosphates, benzophenones, bonzotriazoles, hindered amines, cyanoacrylates, sallicylates and oxalic acid anillides are preferably used. In particular, compounds disclosed in Japanese Patent Laid-Open Publications No. 8-53614, 10-101873, 11-114430 and 2003-151346 are preferably used.

As the fibers, for instance, perfluorocarbon fibers, cellulose fibers, glass fibers and polyethylene fibers are preferably used. In specific, the fibers disclosed in Japanese Patent Laid-Open Publications No. 10-312815, 2000-231938, 2001-307545, 2003-317748, 2004-63430 and 2004-107461 are preferably used.

As the fine particles, for instance, titanium oxide, and zirconium oxide are preferably used. In specific, the fine particles disclosed in Japanese Patent Laid-Open Publications No. 2003-178777 and 2004-217931 are preferably used.

As the water absorbers, that is, the hydrophilic substances, for instance, cross-linked polyacrylate salt, starch-acrylate salt, poval (polyvinyl alcohol), polyacrylonitrile, carboxymethylcellulose, polyvinylpyrrolidone, polyglycoldialkylether, polyglycoldialkylesther, synthetic zeolite, titania gel, zirconia gel, and yttria gel are preferably used. In specific, the water absorbers disclosed in Japanese Patent Laid-Open Publications No. 7-135003, 8-20716 and 9-351857 are preferably used.

As the plasticizer, for instance, phosphoric acid ester compound, chlorinated paraffin, alkylnaphthalene type compound, sulfone alkylamide compound, oligo ether, and aromatic nitrile are preferably used. In specific, the plasticizers disclosed in Japanese Patent Laid-Open Publications No. 2003-288916 and 2003-317539 are preferably used.

As the solubilizers, substances whose boiling points or sublimation points are not less than 250°C are preferable, and those not less than 300°C are more preferable.

It is also possible to add various polymers to the dope for following objectives: (1) to enhance the mechanical strength and (2) to increase the acid concentration in the membrane.

A polymer whose molecular weight is approximately in a range of 10000 to 1000000 and soluble to the solid electrolyte is suitable to achieve the above objective (1). For instance, perfluoropolymer, polystyrene, polyethyreneglycol, polyoxetane, polyether ketone, polyether sulfone, and the polymers containing two or more structural repeating units of the above polymers are preferable. It is also possible to improve the solubility of the above polymer in the solid electrolyte by adding the solubilizer. As the solubilizer, the substance with the boiling point or the sublimation point of not less than 250° C is preferable, and that not less than 300° C is more preferable.

A polymer having proton acid segment and the like is preferable to achieve the above objective (2). As such polymer, for instance, perfluorosulfone acid polymer such as Nafion (registered trademark), sulfonated heat-resistant aromatic polymer compounds such as sulfonated polyether ether ketone having phosphoric acid in the side chain, sulfonated poly ether sulfone, sulfonated polysulfone, and sulfonated polybenzimidazole are used. Further, it is preferable to add the above substances to the dope in a range of 1-30 wt.% to the whole weight of the membrane.

In the case where the obtained solid electrolyte membrane is used for the fuel cell, it is possible to add an active metal catalyst to the dope for promoting redox reaction of the anode fuel and the cathode fuel. Since the fuel permeated in the solid electrolyte from one of the electrodes is consumed therein without reaching the other electrode, the crossover phenomenon is prevented. Active metal catalyst is not particularly limited as long as it functions as the catalyst for the electrodes. However, platinum or platinum based alloy is especially suitable.

### [Dope Production]

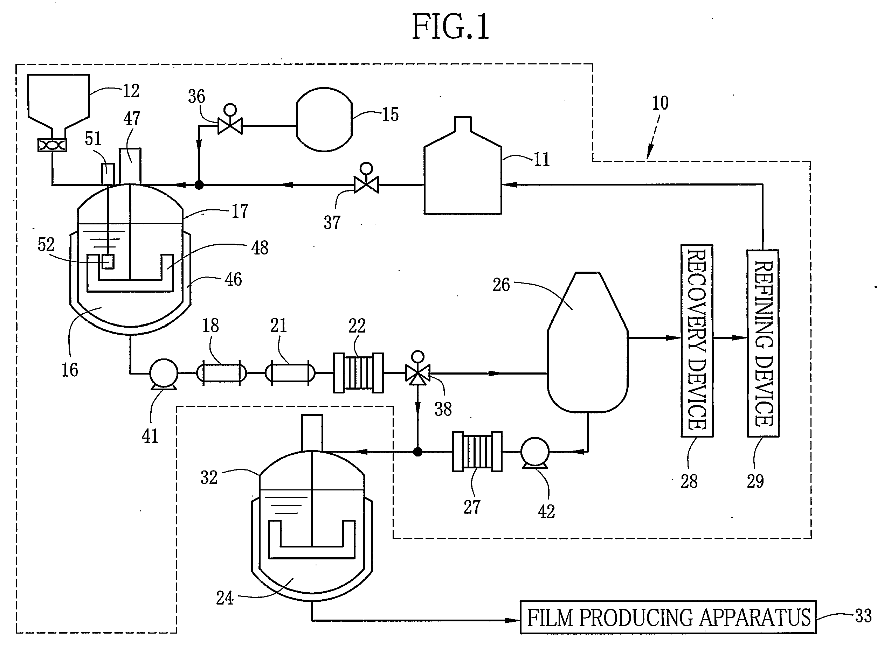

Fig. 1 illustrates a dope producing apparatus 10. The dope producing apparatus 10 is constituted of a solvent tank 11, a hopper 12, an additive tank 15, a mixing tank 16, a heating device 18, a temperature controlling device 21, a filtration device 22, a flash device 26, and a filtration device 27. The solvent tank 11 stores the solvent. The hopper 12 supplies a solid electrolyte. The additive tank 15 stores the additive. The mixing tank 16 mixes the solvent, the solid electrolyte and the additive to form a liquid mixture 16. The heating device 18 heats the liquid mixture 16. The temperature controlling device 21 controls the temperature of the heated liquid mixture 16. Thereafter, the filtration device 22 filters the liquid mixture 16. After the filtration, the flash device 26 controls the concentration of the dope 24. Then the filtration device 27 filters the dope 24. The dope producing apparatus 10 further includes a recovery device 28 and a refining device 29. The recovery device 28 recovers the solvent. The refining device 29 refines the recovered solvent. The dope producing apparatus 10 is connected to a membrane producing apparatus 33 via a stock tank 32. Valves 36-38 for controlling a liquid feeding amount, and pumps 41, 42 for feeding the liquid are provided in the dope producing apparatus 10. The positions and the number of the valves and the pumps are properly changed.

The dope 24 is produced in the following method when the dope producing apparatus 10 is used. First, the valve 37 is opened to feed a solvent from the solvent tank 11 to the mixing tank 17. Next, the solid electrolyte in the hopper 12 is fed to the mixing tank 17. The solid electrolyte may be continuously fed to the mixing tank 17 through a supplying device which continuously measures and supplies the solid electrolyte, or intermittently fed to the mixing tank 17 through a supplying device which measures and supplies the solid electrolyte by a predetermined amount. Further, the valve 36 is adjusted to feed a necessary amount of additive solution from the additive tank 15 to the mixing tank 17.

Other than feeding the additive in the form of solution, for instance, in the case the additive is liquid at room temperature, the additive can be fed to the mixing tank 17 in the liquid form. Further, in the case the additive is solid, it is possible to use the hopper 12 to feed the additive to the mixing tank 17. To add several additives, it is possible to dissolve several additives in a solution and put the solution in the additive tank 15. It is also possible to use plural additive tanks. Each of the additive tanks is filled with the solution containing a different additive. Each solution may be separately fed to the mixing tank 17 through a pipe independent from each other.

In the above description, the solvent, the solid electrolyte and the additive are put into the mixing tank 17 in this order. However, the order is not limited to the above. For instance, a preferable amount of the solvent is fed to the mixing tank 17 after feeding the solid electrolyte to the mixing tank 17. Further, it is not necessary to mix the additive in the mixing tank 13 together with the solid electrolyte and the solvent. The additive may be mixed to the mixture of the solid electrolyte and the solvent by using an inline-mixing method in a later process.

A jacket 46, a first stirrer 48 rotated by a motor 47 and a second stirrer 52 rotated by a motor 51 are preferably attached to the mixing tank 17. The jacket 46 wraps around the mixing tank 17 to supply a heat transfer medium in a space between the mixing tank 17 and the jacket 46. The temperature of the mixing tank 17 is controlled by the heat transfer medium flowing in the space between the tank 17 and the jacket 46. A preferable temperature range of the mixing tank 17 is from -10°C to 55°C. The liquid mixture 16, in which the solid electrolyte is swelled in the solvent, is obtained by properly selecting and rotating the first and second stirrers 48, 52. It is preferable that the first stirrer 48 has an anchor blade, and the second stirrer 52 has an eccentric stirrer of a dissolver type.

Next, the liquid mixture 16 is transported to the heating device 18 through a pump 41. It is preferable that a pipe through which the liquid mixture 16 passes in the heating device 18 is provided with the jacket. The heat transfer medium passes through a space between the pipe and the jacket. Further the heating device 18 preferably has a pressurizing section (not shown) to apply pressure to the liquid mixture 16. Thereby, the solid electrolyte in the liquid mixture 16 is dissolved effectively and efficiently while the liquid mixture 16 is heated and/or pressurized. Hereinafter, the method for dissolving the solid electrolyte in the solvent by heating is referred to as a heat dissolution method. In the heat dissolution method, the liquid mixture 16 is preferably heated to reach the temperature in a range of 60°C to 250°C.

Instead of the heat-dissolution method, a cooling-dissolution method is possibly used for dissolving the solid electrolyte in the solvent. In the cooling dissolution method, the liquid mixture 16 is preferably cooled in a range of -100° C to -10° C. It becomes possible to sufficiently dissolve the solid electrolyte contained in the liquid mixture 16 in the solvent by properly selecting one of the heat-dissolving method and the cooling-dissolving method.

The temperature of the liquid mixture 16 is adjusted by the temperature control device 21 to reach the room temperature. Thereafter, the liquid mixture 16 is filtered through the filtering device 22 to remove the foreign matters such as the impurities and the agglomeration. Hereinafter the liquid mixture 16 is referred to as the dope 24. An average pore diameter of the filter of the filtering device 22 is preferably 50 *µ*m or less.

After the filtration, the dope 24 is transported to the stock tank 32 through the valve 38 and temporarily stored, and then used for the membrane production.

However, a method, in which the solid electrolyte is swelled and then dissolved into the solvent, requires a longer time as the concentration of the solid electrolyte increases, which reduces the production efficiency. In such case, it is preferable to prepare the dope having the lower concentration of the solid electrolyte, and then to carry out a concentration process to obtain the intended concentration. For instance, the dope 24 filtered through the filtering device 22 is transported to the flash device 26 through the valve 38, and a part of the solvent contained in the dope 24 is evaporated to concentrate the dope 24. The concentrated dope 24 is transported from the flash device 26 to the filtering device 27 through the pump 42. At the filtration, the temperature of the dope 24 is preferably from 0°C to 200°C. The impurities of the dope 24 are removed through the filtering device 27. Thereafter, the dope 24 is transported to and temporarily stored in the stock tank 32, and then is used for the membrane production. Note that the foams may be formed in the concentrated dope 24. It is preferable to perform processing to remove the foams prior to transporting the concentrated dope 24 to the filtering device 27. To remove the foams, it is possible to apply known methods, for instance, an ultrasonic irradiation method in which the ultrasound is irradiated to the dope 24.

Further, the sovent vapor generated by the flash evaporation in the flash device 26 is condensed to liquid and recovered by the recovery device 28 having the condenser (not shown). The recovered solvent is refined as the solvent for the dope production in the refining device 29 and reused. Such recovery and refining are advantageous to reduce production cost and also prevent adversely affecting human health and environment by virtue of the closed system.

By using the above methods, the dope 24 whose concentration of the solid electrolyte is in a range of not less than 5 wt.% and not more than 50wt.% is produced. The concentration of the solid electrolyte is more preferably in a range of not less than 10 wt.% and not more than 40 wt.%. Further, the concentration of the additive is preferably in a range of not less than 1 wt.% and not more than 30 wt. % when the whole solids contained in the dope 24 is considered to be 100 wt.%.

### [Membrane production]

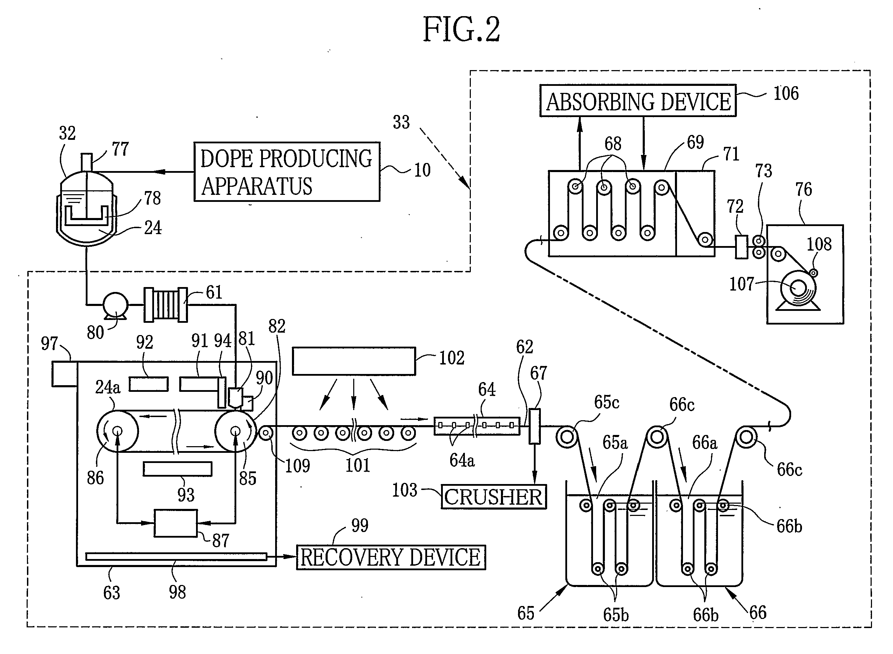

Hereinafter the method for producing the solid electrolyte membrane is described. Fig. 2 illustrates a membrane producing apparatus 33. The membrane producing apparatus 33 is provided with a filtering device 61, a casting chamber 63, a tenter device 64, an edge slitting device 67, a first liquid bath 65, a second liquid bath 66, a drying chamber 69, a cooling chamber 71, a neutralization device 72, a knurling roller pair 73 and a winding device 76. The filtering device 61 removes the impurities from the dope 24 transported from the stock tank 32. Thereafter, from the casting chamber 63, the dope 24 is cast to form a solid electrolyte membrane (hereinafter referred to as a membrane) 62. The tenter device 64 dries the membrane 62 while holding the both side edges of the membrane 62. The edge slitting device 67 cuts off the side edges of the membrane 62. Then, the membrane 62 is immersed in the first liquid bath 65 and the second liquid bath 66. In the drying chamber 69, the membrane 62 is bridged across plural rollers 68 and dried while the membrane 62 is being transported by the rollers 68. In the cooling chamber 71, the membrane 62 is cooled. The neutralization device 72 reduces the charged voltage of the membrane 62. The nurling roller pair 73 embosses the side edges of the membrane 62. The winding device 76 winds the membrane 62.

A stirrer 78 rotated by a motor 77 is provided in the stock tank 32. By using the stirrer 78, precipitation and agglomeration of the solids in the dope 24 are prevented. The stock tank 32 is connected to the filtering device 61 through a pump 80. The average diameter of the filter used in the filtering device 61 is preferably 10 *µ* m or less. Thereby, impurities causing degradation of initial performance of proton conductivity and degradation of proton conductivity with time are prevented from being mixed into the dope 24. Note that impurities such as insoluble contents are visually identified by emitting light from a fluorescent lamp to a sample dope taken from the stock tank 32.

The casting chamber 63 is provided with a casting die 81 for casting the dope 24, and a belt 82 which is a support (being transported). A precipitation hardened stainless steel is preferable for the material of the casting die 81. The material preferably has a coefficient of thermal expansion at most 2×10⁻⁵(°C ⁻¹). Further, the material with the almost same anti-corrosion properties as SUS316 in examination of corrosion in electrolyte solution can also be used. Further, the material has the anti-corrosion properties which do not form pitting (holes) on the gas-liquid interface after having been dipped in a liquid mixture of dichloromethane, methanol and water for three months. Further, it is preferable to manufacture the casting die 81 by grinding the material which passed more than a month after casting. Thereby, the dope 24 is cast onto the casting die 81 uniformly. Accordingly, streaks and the like in the casting membrane 24a are prevented, as will be described later. It is preferable that the finish precision of a contacting surface of the casting die 81 to the dope 24 is 1 *µ*m or less of the surface roughness, and the straightness is 1 *µ*m/m or less in any direction. Clearance of the slit of the casting die 81 is automatically controlled in the range from 0.5mm to 3.5mm. A portion of the lip end of the casting die 81 contacting the dope is processed so as to have a constant chamfered radius R at 50 *µ*m or less throughout the width of the casting die 81. Preferably, the casting die 81 is of a coat-hanger type.

A width of the casting die 81 is not limited; however, the width of the casting die 81 is preferably in the range between 1.1 times and 2.0 times larger than a width of the membrane as an end product (the end product membrane). Further, it is preferable to install a temperature controlling device 21 to the casting die 81 for maintaining a predetermined temperature of the dope 24 during the production of the membrane. Further, the casting die 81 is preferably provided with bolts (heat bolts) at predetermined intervals in the width direction of the casting die 81 for adjusting the thickness of the membrane, and an automatic thickness control mechanism which adjusts clearance of the slit by using the heat bolts. In the membrane production process, it is preferable to set a profile according to the flow volume of the pump 80 based on the previously set program. To accurately control the amount of the dope to be transported, the pump 80 is preferably a high-precision gear pump. Further, in the membrane producing apparatus 33, it is also possible to carry out a feedback control based on an adjustment program according to a profile of a thickness gauge, for instance, an infrared thickness gauge (not shown). The casting die 81 whose slit opening of the lip end is adjustable within a range of ± 50 *µ*m is preferably used so as to maintain a difference in the thickness between two arbitrary positions on the membrane 62 within 1 *µ*m except for the side edges of the membrane 62 as the end product.

Further, it is more preferable that lip ends of the casting die 81 are provided with a hardened layer. Methods for forming the hardened layer are not particularly limited. For instance, there are methods such as ceramic coating, hard chrome plating, and nitriding treatment. If the ceramic is used as the hardened layer, the ceramic which is grindable but not friable, with a lower porosity and the good corrosion resistance is preferred. The ceramic without affinity for and adherence to the casting die 30 is preferable. For instance, as the ceramic, tungsten carbide, Al₂O₃, TiN, Cr₂O₃ can be used, and especially tungsten carbide (WC) is preferable. A WC coating is performed in a thermal spraying method.

The dope discharged to the lip end of the casting die 81 is partially dried and becomes solid. In order to prevent such solidification of the dope, a solvent supplying device (not shown) for supplying the solvent to the lip end is preferably disposed in the proximity of the lip end. The solvent is preferably supplied in a peripheral area of a three-phase contact line on which the lip ends contacts with the casting bead and the outside air. It is preferable to supply the solvent in the range from 0.1mL/min to 1.0mL/min to each of the bead edges so as to prevent the foreign matters such as impurities precipitated from the dope or those present in the outside from being mixed in the casting membrane 24a. It is preferable to use a pump with a pulsation of 5% or less for supplying the solvent.

The belt 82 below the casting die 81 is bridged across the rollers 85, 86, and is continuously transported by the (rotation) of at least one of the rollers 85, 86.

The width of the belt 82 is not particularly limited. However, the width is preferably in a range of 1.1 times to 2.0 times larger than the casting width of the dope 24. Further, the length of the belt 82 is preferably 20m-200m. The thickness of the belt 82 is preferably 0.5mm-2.5mm. Further the belt 82 is preferably polished such that the surface roughness is 0.05 *µ*m or less.

Material of the belt 82 is not particularly limited. However, it is preferable to use a plastic film which is insoluble to the organic solvent in the dope 24. The material of the plastic film is preferably nonwoven plastic fabric made of polyethylene terephthalate (PET) film, polybutylene terephthalate (PBT) film, nylon 6 film, nylon 6, 6 film, polypropylene film, polycarbonate film, polyimide film and the like. The belt 82 of a long length is preferable. It is preferable that the belt 82 has chemical stability against the solvent used. It is also preferable that the belt 82 is heat-resistant to endure the temperature of the membrane production. Note that it is also possible to use a stainless support with the long length.

In order to keep a surface temperatures of the rollers 85, 86 at predetermined values, it is preferable that a heat transfer medium circulating device 87 is attached to each of the rollers 85 and 86. In this apparatus , a passage (not shown) for the heat transfer medium is formed in each of the rollers 85 and 86. The temperatures of the rollers 85 and 86 are kept at the predetermined values by passing the heat transfer media kept at the predetermined temperatures through the passages. The surface temperature of the belt 82 is properly set according to the type of the solvent, the type of the solid, the concentration of the dope and so forth.

Instead of the rollers 85, 86 and the belt 82, it is also possible to use a casting drum(not shown) as the support. In this case, it is preferable that the casting rotates with a high precision such that the variation in the rotation speed is 0.2% or less. It is preferable that the polishing is made such that a surface roughness is 0.01 *µ*m or less. It is preferable that the surface of the casting is hard chrome-plated which offers sufficient corrosion resistance and hardness. It is preferable to minimize the surface defect of the casting 31, the belt 82 and the rotation rollers 85, 86. Concretely, the number of pin holes whose diameter is 30 *µ*m or more is preferably zero. The number of pinholes whose diameter is not less than 10 *µ*m and less than 30 *µ*m is preferably 1 or less per 1m². The number of pinholes whose diameter is less than 10 µm is preferably 2 or less per 1m².

Further, a decompression chamber 90 is preferably provided in the proximity of the casting die 81 for adjusting the pressure in the upstream area from the casting bead in the support moving direction. The casting bead is formed between the casting die 81 and the belt 82.

In the proximity of the belt 82, air blowers 91-93 and an air shielding plate 94 are provided. The air blowers 91-93 blow air onto the casting membrane 24a to evaporate the solvent. The air shielding plate 94 prevents the air which may damage the surface of the casting membrane 24a from blowing onto the casting membrane 24a.

In the casting chamber 63, a temperature controlling device 97 and a condenser 98 are provided. The temperature controlling device 97 keeps the temperature inside the casting chamber 63 at the predetermined value. The condenser 98 condenses and recovers the solvent vapor. A recovery device 99 is provided outside the casting chamber 63. The recovery device 99 recovers the condensed and liquefied organic solvent.

A transfer section 101 is provided in the downstream from the casting chamber 63. In the transfer section, an air blower 102 is provided for blowing dry air onto the membrane 62. The membrane 62 passed through the transfer section 101 is transported to the tenter device 64 in which the membrane 62 is stretched in the width direction while both side edges are held by membrane holding members such as clips 64a or pins. The dry air is introduced to the tenter device 64 to dry the membrane 62. Note that it is preferable to separate inside the tenter device 64 into different temperature zones to adjust the drying conditions. After passing the tenter device 64, the membrane 62 is transported to the edge slitting device 67. In the edge slitting device 67, a crusher 103 is provided for crushing the side edges cut off from the membrane 62 into chips.

The first liquid bath 65 and the second liquid bath 66 are provided downstream from the edge slitting device 67. The first liquid bath 65 is provided with guide rollers 65b, 65c. The second liquid bath 66 is provided with guide rollers 66b, 66c. A first liquid 65a is stored in the first liquid bath 65. A second liquid 66a is stored in the second liquid bath 66a.

A liquid which is a poor solvent of the solid electrolyte having a lower boiling point than that of the organic solvent is used as the first and second liquids 65a, 65b. It is preferable that the liquid has high solubility in the organic solvent. By using the above liquid, a part of the solvent contained in the membrane 62 is substituted by the first and second liquids 65a and 66a so that the remaining solvent amount is reduced. By this substitution, the boiling point of the remaining solvent contained the membrane 62 is lowered. Thus, the removal of the remaining solvent in the precursor membrane in the later first drying process 67 is facilitated.

By contacting the casting membrane 24a and/or the membrane 62 with a different solvent, a part of the component of different solvent substitutes for that of the organic solvent contained in the casting membrane 24a and/or the membrane 62. This is referred to as a solvent substitution. As the temperatures of the first and second liquids 65a and 65b increase, the solvent substitution is activated. However, the abrupt solvent substitution causes wrinkles in the membrane 62. On the contrary, as the temperatures of the first and second liquids 65a and 66a are lowered, it takes longer time for the solvent substitution. Accordingly, reaction speed of the solvent substitution should be controlled to avoid the above problem.

In the present invention, the temperatures of the first and second liquids 65a, 66a are respectively controlled in a range of 10° C to 80° C to avoid the above problem. Note that it is more preferable to control the temperatures of the first and second liquids 65a and 66a in a range of 20° C to 50° C. Further, the second liquid 66a may contain the same compound as that in the first liquid 65a. As the second liquid 66a, it is also possible to use the compound having the lower boiling point than that of the first liquid 65a.

In the drying chamber 69, an absorbing device 106 is provided. The absorbing device 106 absorbs and recovers the solvent vapor evaporated from the membrane 62. In Fig. 2, a cooling chamber 71 is provided downstream from the drying chamber 69. It is also possible to provide a humidification chamber (not shown) between the drying chamber 69 and the cooling chamber 71. The humidification chamber adjusts the moisture content in the membrane 62. The neutralization device 72 is a neutralization bar which controls the charged voltage of the membrane 62 in a predetermined range (for instance from -3kV to +3kV). In Fig.2, the neutralization device 72 is disposed downstream from the cooling device 71 as an example. The position of the neutralization device 72 is not limited to the position illustrated in Fig. 2. The knurling roller 73 embosses the both side edges of the membrane 62. Inside the winding device 76, a winding roll 107 and a press roller 108 are provided. The winding roll 107 winds up the membrane 62. The press roller 108 controls the tension of the membrane 62 at the time of winding.

Next, an example of a method for producing membrane 62 using the membrane producing apparatus 33 is described in the following. The dope 24 is kept uniform by the rotation of the stirrer 78. It is possible to add various additives to the dope 24 while the dope 24 is being stirred.

The dope 24 is transported to the stock tank 32. Until the casting of the dope 24, the precipitation and the agglomeration of the solids are prevented by stirring the dope 24. Then, the dope 24 is filtered through the filtering device 61 so as to remove the foreign matters whose particle size is larger than a predetermined size and those in a gel-form.

Then the dope 24 is cast onto the belt 82 from the casting die 81. It is preferable that the rollers 85 and 86 are driven so as to adjust the tension of the belt 82 in the range of 10³ N/m and 10⁶ N/m. It is preferable to adjust the relative position of the rollers 85, 86 or the rotation speed of at least one of the rollers 85, 86. Moreover, a relative speed difference between the belt 82 and the rollers 85 and 86 are adjusted to be 0.01m/min or less. Preferably, speed fluctuation of the belt 82 is 0.5% or less, and meandering thereof caused in a width direction while the belt 82 makes one rotation is 1.5mm or less. In order to control the meandering, it is more preferable to provide a detector (not shown) and a position controller (not shown) to perform feedback control of the position of the belt 82. The detector detects the positions of both sides of the belt 82. The position controller adjusts the position of the belt 82 according to a measurement value of the detector. With respect to a portion of the belt 82 located directly below the casting die 81, it is preferable that vertical positional fluctuation caused in association with the rotation of the belt 82 is adjusted to be 200 *µ*m or less. Further, it is preferable that the temperature in the casting chamber 63 is adjusted within a range of -10°C to 57° C by the temperature controlling device 97. The solvent vapor in the casting chamber 63 is collected by the recovery device 99 and is recycled and reused as the dope for preparing the solvent.

The casting bead is formed between the casting die 81 and the belt 82, and the casting membrane 24a is formed on the belt 82. In order to stabilize the casting bead, it is preferable that the upstream area from the casting bead in the transporting direction of the casting die 81 is decompressed by the decompression chamber 90 to achieve a predetermined pressure value. Preferably, the upstream area from the casting bead is decompressed within a range of -2500Pa to -10Pa relative to the downstream area from the casting bead. Moreover, it is preferable that a jacket (not shown) is attached to the decompression chamber 90 to maintain the inside temperature at a predetermined value. Further, it is preferable to attach a suction unit (not shown) to an edge of the casting die 81 in order to keep a desired shape of the casting bead. A preferable range of air volume aspirated in the edge portion is 1L/min to 100L/min.

After the casting membrane 24a has possessed a self-supporting property, the casting membrane 24a is peeled off as the membrane 62 from the belt 82 while being supported by a peel roller 109. After that, the membrane 62 containing the solvent is carried along the transporting section 101 supported by the many rollers to the tenter device 64. In the transporting section 101, it is possible to give a draw tension to the membrane 62 by increasing a rotation speed of the downstream roller relative to that of the upstream roller. In the transporting section 101, dry air of a desired temperature is sent from the air blower 102 to the proximity of or directly to the membrane 62 to promote drying of the membrane 62. At this time, it is preferable that the temperature of the dry air is in a range of 20° C to 200° C. The weight of the remaining solvent on the membrane 62 transported from the peel roller 109 is preferably in a range of 10% to 150% with respect to that of the solid electrolyte. The weight of the remaining solvent on the membrane 62 transported from the transporting section 101 is preferably in a range of 5% to 120% with respect to that of the solid electrolyte.

The membrane 62 transported to the tenter device 64 is dried while carried in a state that both sides thereof are held with clips. Through at least one of the transporting section 101 and the tenter device 64, the membrane 62 is preferably stretched in at least one of casting direction and width direction by 100.5%-300% with respect to the size of the membrane 62 before the stretching. The weight of the remaining solvent in the membrane 62 transported from the tenter device 64 is preferably less than 5% with respect to that of the solid electrolyte.

The membrane 62 is dried by the tenter device 64 until the remaining solvent amount reaches a predetermined value. Both side edges of the membrane 62 are cut off by the edge slitting device 67. The cut edges are sent to the crusher 103 by a cutter blower not shown. The membrane edges are shredded into chips by the crusher 103. Since the chips are recycled for preparing the dope, the materials are efficiently utilized. The slitting process for the membrane side edges may be omitted. However, it is preferable to perform the slitting process between the casting process and the membrane winding process.

The membrane 62 whose side edges are cut off is sequentially transported to the first liquid bath 65 and the second liquid bath 66 through the guide roller 65b, 65c, 66b and 66c, and immersed into the first liquid 65a and second liquid 66a. By immersing the membrane 62 in the liquid 65a, the first liquid 65a substitutes for a part of the solvent contained in the membrane 62. Thus, the part of the solvent is removed from the membrane 62. As a result of this solvent substitution, the first liquid 65a is dissolved into the solvent contained in the membrane 62 to generate a first liquid mixture which is more likely to evaporate than the solvent in the membrane 62. By immersing the membrane 62 into the second liquid 66a, the second liquid 66a substitutes for the solvent contained in the membrane 62 to further remove the remaining solvent contained in the membrane 62. As a result of this solvent substitution, the second liquid 66a is dissolved into the first liquid mixture in the membrane 62 to generate the second liquid mixture which is more likely to evaporate than the first liquid mixture.

In the first and second liquid baths 65 and 66, since the membrane 62 is immersed into the first and second liquids 65a and 66a whose temperatures are kept at the predetermined values, abrupt shrinkage of the membrane 62 during the solvent substitution is prevented. Accordingly, the wrinkles are prevented in the membrane 62. Further, in terms of shortening the production time of the solid electrolyte membrane, it is preferable to shorten each contact time of the membrane 62 to the first and second liquids 65a and 66a as much as possible. Each contact time is preferably 30 minutes or less, more preferably 10 minutes or less.

After the immersion in the second liquid bath 66, the membrane 62 is transported to the drying chamber 69. Dry air is supplied to the drying chamber 69 to dry the membrane 62 while the membrane 62 is being transported in the drying chamber 69 by the rollers 68. After the drying in the drying chamber 67, the weight of the remaining solvent in the membrane 62 is preferably less than 5% with respect to the weight of the solid electrolyte. In the drying chamber 69, the first and second liquid mixtures containing the solvent are evaporated from the membrane 62. As a result, the solvent is removed from the membrane 62. Since the first liquid mixture contains the first liquid 65a whose boiling point is lower than that of the solvent, and the second liquid mixture contains the second liquid 66a whose boiling point is lower than that of the solvent, the boiling points of the first liquid mixture and the second liquid mixture are lower than that of the solvent. Accordingly, the membrane 62 is dried effectively and efficiently, in other words, the removal of the solvent is more facilitated compared to the evaporation of the solvent contained in the membrane 62 without being contacted with the first and second liquids 65a and 66a. For that reason, by using the solid electrolyte membrane in the fuel cell, it becomes possible to prevent reduction in electromotive force due to inhibition of proton flow caused by the remaining organic solvent in the membrane 62. In addition, the solid electrolyte membrane is produced efficiently since a pretreatment such as acid processing by neutralization is not necessary.

It is also possible to use different chemical compounds for the first and second liquids 65a, 66a. For instance, the drying of the membrane 62 is more facilitated by using the chemical compound whose boiling point is lower than that of the first liquid 65a as the second liquid 66a. Further, in the case the solvent is a mixture, as the first and second liquids 65a and 66a, the chemical compounds with a high affinity to the component of the solvent which is least likely to evaporate in the later drying process because of the highest boiling point, or of the highest mixing ratio and so forth is preferably used.

A temperature inside the drying chamber 69 is not particularly limited. However, the temperature is determined according to the heat resistance (glass transition point Tg, heat deflection temperature under load, melting point Tm, continuous working temperature) of the solid electrolyte. The temperature is preferably not more than the Tg. In the drying chamber 69, the membrane 62 is transported while being bridged across the rollers 68. The solvent vapor generated by drying the membrane 62 in the drying chamber 69 is adsorbed and recovered by the absorbing device 106. The air from which the solvent is removed is supplied to the drying chamber 69 as the dry air.

The drying chamber 69 is preferably divided into plural sections so as to change the temperature of the dry air in each section. It is also preferable to provide a predrying chamber (not shown) between the edge slitting device 67 and the drying chamber 69 to predry the membrane 62. Thereby, in the drying chamber 69, an abrupt increase of the membrane temperature is prevented so that changes in shapes and conditions of the membrane 62 are prevented. To dry the membrane 62 in the drying chamber 69, instead of or in addition to the dry air, pressure reduction, far-infrared rays, or microwaves is also used.

After the drying in the drying chamber 69, the membrane 62 is cooled to room temperature in a cooling chamber 71. When the humidification chamber is provided between the drying chamber 69 and the cooling chamber 71, it is preferable to spray air whose humidity and temperature are adjusted to desired values to the membrane 62. Thereby, curling and winding defects in the membrane 62 are prevented.

In the solution casting method, various processes such as the drying process and the edge slitting and removing process are performed between the membrane peeling process in which the membrane (solid electrolyte membrane) 62 is peeled off from the support and the membrane winding process in which the membrane 62 is wound. During each process or between the above processes, the membrane 62 is mostly supported or transported by using the rollers. There are driving rollers and non-driving rollers. The non-driving rollers are used for determining the transporting passage of the membrane 62 and improving the stability during the transportation of the membrane 62.

The charged voltage during the transportation of the membrane 62 is controlled by using the neutralization device 72 at a desired value. The charged voltage after the neutralization is preferably in a range of -3kV to +3kV. Further, knurling is preferably provided to the membrane by using the knurling roller pair 73. Note that the height of each of projections and depressions is preferably in a range of 1 *µ*m to 200 *µ*m.

The membrane 62 is wound by the winding roll 107 of the winding device 76. It is preferable to apply the tension of the desired value to the membrane 62 by using the press roller 108 during the winding of the membrane 62. It is preferable to gradually change the tension applied to the membrane 62 from the start to the end of the winding. Thereby, excessive tightening during the winding is prevented. A width of the membrane 62 to be wound is preferably 100mm or more. However, the present invention is also applicable to the production of thin membranes having the thickness of not less than 5 *µ*m and not more than 300 *µ*m.

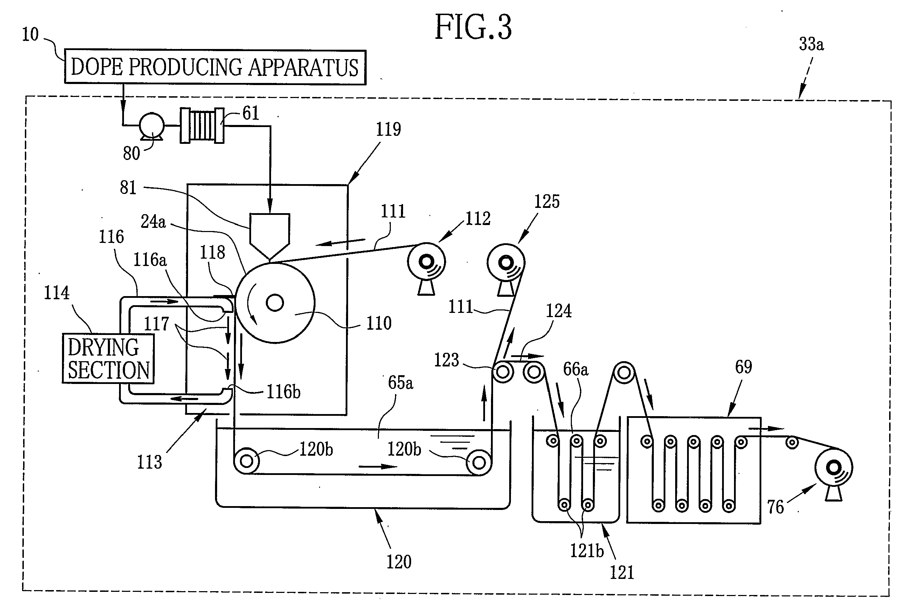

Next, a membrane producing apparatus 233 is described. As shown in Fig. 3, the membrane producing apparatus 233 uses a plastic film (hereinafter referred to as a web) 111 wrapped around a casting drum 110 as the support instead of the belt 82 used in the membrane producing apparatus 33. The web 111 is loaded in a web feeding device 112 in a roll form. From the web feeding device 112, the web 111 is fed into the casting drum 110. Above the casting drum 110, the casting die 81 is disposed close to the web 111. The dope is cast from the casting die 81 onto the web 111 to form the casting membrane 24 on the web 111 while the web 111 is being transported. Note that the dope 24 and the casting die 81 are the same as those used in the apparatus 33 so that the description thereof is omitted.

Along the passage of the web 111, a casting membrane drying device 113 is provided. The casting membrane drying device 113 is constituted of a drying section 114. The drying section 114 is constituted of a duct 116 having an inlet 116a and an outlet 116b, an air blower, a heating device, an opening to introduce outside air and so forth. Dry air 117 is blown from the outlet 116a to the casting membrane 24a in the direction of and parallel to the transporting direction of the web 111. Thus, the evaporation of the solvent is promoted. When the casting membrane drying device 113 uses the dry air for drying the casting membrane 24a as above, an air shield plate 118 is necessary between the casting die 81 and the outlet 116a. Fluctuations on the surface condition of the casting membrane 24a caused by the dry air 117 is prevented by the air shield plate 118 so that the membrane with low unevenness in the thickness is obtained. The casting die 81, the casting drum 110, the inlet 116a and the outlet 116b of the casting membrane drying device 113 are provided in a casting chamber 119.

In the case the predetermined amount of solvent is evaporating from the casting membrane 24a, in order to control the amount of solvent vapor in the casting chamber 119, the gases other than the solvent vapor in the casting chamber 119 should be recovered and kept at a predetermined amount. Instead of the above dry air supplying method, it is also possible to put a cover in the transportation passage of the web 111 from the casting die 81 to the first liquid bath 120 or to adjust an interval between the casting and the immersion in the first liquid bath 120. Moreover, it is also possible to adjust pressure of the solvent vapor, the pressure of gases other than the solvent vapor, the temperature and air supplying velocity and/or air discharge velocity in this ambience. As the drying method, it is also possible to use infrared rays, decompression, far infrared rays and microwaves for drying instead or in addition to the above dry air.

As the web 111, the nonwoven plastic film such as polyethylene terephthalate (PET) film, polybutylene terephthalate (PBT) film, nylon 6 film, nylon 6, 6 film, polypropylene film, polycarbonate film, or polyimide film is used. It is preferable that the web 111 has chemical stability against the solvent. It is also preferable that the web 111 is heat resistant to withstand the membrane forming temperature. In this example , the PET film is used as the web 111.

The surface temperature of the web 111 is properly determined according to the material thereof. The surface temperature is preferably adjusted in a range of -20° C to 100° C. To adjust the surface temperature of the web 111, the passage for the heat transfer medium (not shown) is formed inside the casting drum 110 to flow the heat transfer medium whose temperature is kept at the predetermined value. Further, during the rotation of the casting drum 110 the position fluctuation in the vertical direction of the casting drum 110 due to displacements of the rotation center is preferably adjusted to be less than 0.2mm. Defects on the surface of the web 111 should be minimized. Particularly, the number of pin holes whose diameter is 30 *µ*m or more is zero, the number of pinholes whose diameter is 10 *µ*m or more and less than 30 *µ*m is 1 or less per 1m², and the number of pinholes whose diameter is less than 10 *µ*m is 2 or less per 1m². The weight of the remaining solvent contained in the membrane 62 transported from the casting chamber 119 is preferably not less than 10% and not more than 250% of that of the solid electrolyte.

The first and second liquid baths 120, 121 are constituted in the same manner as those in the apparatus 33. The first liquid 65a is stored in the first liquid bath 120. The second liquid 66a is stored in the second liquid bath 121. After the immersion in the first liquid bath 120, the casting membrane 24a on the web 111 has a self-supporting property. The casting membrane 24a is peeled off from the web 111 by using a peel roller 123. Hereinafter the peeled membrane is referred to as a membrane 124. The membrane 124 is immersed in the second liquid bath 121 by using guide rollers 121b. The solvent contained in the casting membrane 24a is reduced by the solvent substitution in the first liquid bath 120 to promote the drying of the membrane 124 in the next drying process in the drying chamber 69. In addition, by the solvent substitution in the second liquid bath 121, the drying of the membrane 124 is further promoted. After the immersion in the second liquid bath 121, the membrane 124 is dried in the drying chamber 69 and wound by the winding device 76 in the roll form.

The remaining solvent amount in the membrane 124 at the time of peeling off from the web 111 is preferably in a range of 100 wt.% to 400 wt.% to the total solid component. As a predrying process before the immersion in the second liquid bath 121, it is possible to use the tenter device 64 of the apparatus shown in Fig. 2 and/or the drying chamber 69 using the rollers. For instance, the casting membrane 24a is dried in the tenter device 64 together with the web 111 in the tenter device 64 and thereafter, the casting membrane 24a is dried in the drying chamber 69 using the rollers. The order is not particularly limited in the present invention. Further, the tenter device 64 is properly installed, for instance, between the membrane peeling process and the membrane winding process.

After the membrane 124 is being peeled off, the web 111 is wound by a web winding device 125 in a roll form. To supply the web 111 continuously, it is preferable that both the web feeding device 112 and the web winding device 125 have a turret mechanism. Instead of the web feeding device 112 and the web winding device 125, it is also possible to provide guide rollers only. In this case, it is also possible to circulate the web 111 in an endless loop. A surface detecting device is provided between the guide rollers to detect the surface roughness of the web 111. When the number and the size of pin holes exceed the predetermined value, a new web 111 is supplied. To supply the new web 111, the old web 111 is cut and the new web 111 is adhered thereto. When the new web 111 is rotated by a round, the old web 111 is cut off and removed so as to adhere the ends of the new web 111 to form the endless loop. Further, to prevent the membranes 124 from sticking together and to protect the surface thereof, it is also possible to wind the web 111 together with the casting membrane 24a. In this case, the casting membrane 24a is peeled off from the web 111 at the time of producing the fuel cell as will be described later.

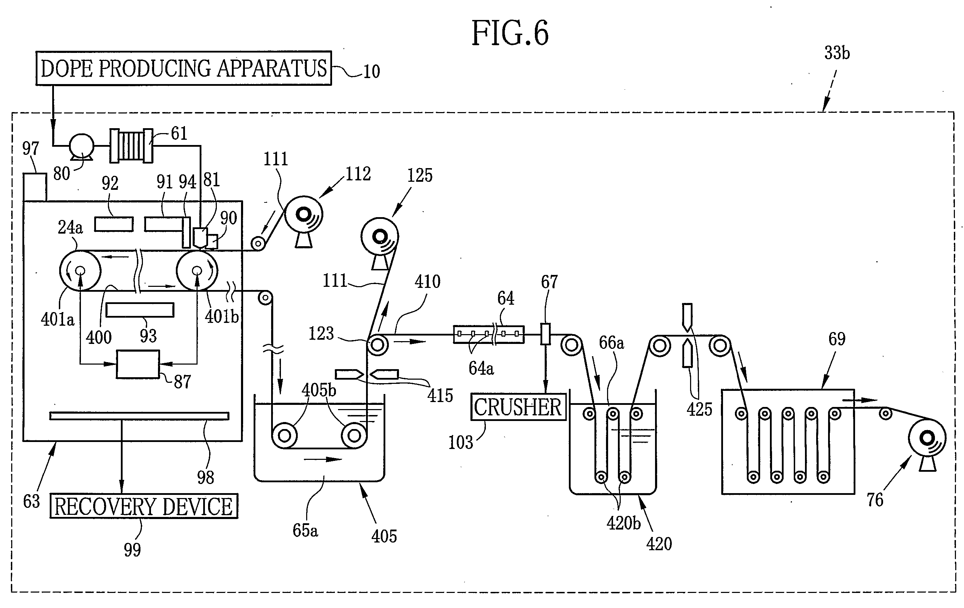

Next, a third example which is the most preferable is described. Fig. 6 is a schematic view of a membrane producing apparatus 333. The membrane producing apparatus 333 is provided with the web 111 instead of the belt 82 of the membrane producing apparatus 33 shown in Fig. 2. To produce the solid electrolyte membrane, in the membrane producing apparatus 333, the casting membrane 24a is peeled off as a membrane 410 after the casting membrane 24a formed on the web 111 is immersed in the first liquid 65a. Note that the same numerals are assigned to the devices and members constituting the membrane producing apparatus 333 which are the same as those shown in Figs. 2, 3, and descriptions thereof are omitted.

The web 111 is loaded in the web feeding device 112 in the roll form in the same manner as that in the apparatus 233. The casting chamber 63 is provided with a belt 400 for supporting the web 111. The belt 400 is bridged across drums 401a, 401b to form a passage through which the web 111 passes in the casting chamber 63. The web 111 is fed by the web feeding device 112 to the belt 400 and transported along the passage in the casting chamber 63. Thereafter, the web 111 is transported out of the casting chamber 63. Instead of using the belt 400, it is also possible to use the above-mentioned casting drum 110 to support the web 111.

In the proximity of the passage in the casting chamber 63, the casting die 81 is disposed. The dope 24 is cast from the casting die 81 to the web 111 while the web 111 is being transported to form the casting membrane 24a. In the proximity of the passage in the downstream from the casting die 81, the air blowers 91-93 and the air shielding plate 94 are provided in the same manner as those in the apparatus 33. Thus, the casting membrane 24a is dried by the dry air from the air blowers 91-93 while the web 111 is being transported along the passage.

The casting membrane 24a is dried until the remaining solvent reaches the predetermined value. Thereafter, the casting membrane 24a together with the web 111 is transported outside the casting chamber 63. In the downstream from the casting chamber 63, the web winding device 125 is disposed. The web 111 is transported by the guide rollers and wound by the membrane winding device 125.

Guide rollers 405b are provided between the casting chamber 63 and the web winding chamber 125. A first liquid bath 405, a first water remover 415 and the peeling roller 123 are disposed in this order. The casting membrane 24a transported from the casting chamber 63 by the web winding device 125 and the guide rollers 405a comes in contact with the first liquid 65a while the casting membrane 24a is supported by the web 111. Thereafter, the casting membrane 24a supported by the web 111 is transported from the first liquid bath 405 to the first water remover 415.

Water on the casting membrane 24a supported by the web 111 is removed by the water remover 415. As the water remover 415, for instance, blade (s), an air knife, or rolls are used.

Among the above, the air knife is most preferable for the water remover 415 since the air knife removes water most efficiently. By adjusting air flow volume and air pressure of the air blown onto the casting membrane 24a, the air knife removes the remaining moisture content on the surface of the casting membrane 24a almost completely. However, if the air flow volume is too large, flutter or tilt may occur in the casting membrane 24a which adversely affect the transporting stability. For that reason, the airflow volume is preferably in a range of 10m/s to 500m/s, more preferably, 20m/s to 300m/s, and most preferably, 30m/s to 200m/s. The above air flow volume is not particularly limited. The air flow volume is properly determined according to the moisture content on the surface of the casting membrane 24a before using the water remover 415, or the transporting speed.

To uniformly remove the moisture content on the surface of the casting membrane 24a, a variation range in airflow velocity distribution in the width direction of the casting membrane 24a is preferably set at 10% or less, and more preferably 5% or less by adjusting the outlet of the air knife or the air supplying method of the air knife. The closer the clearance between the surface of the casting membrane 24a and the outlet of the air knife, the more moisture content on the surface of the casting membrane 24a is removed. However, at the same time, the possibility to damage the surface of the casting membrane 24a by the outlet of the air knife also increases. Accordingly, the air knife is installed such that the clearance between the surface of the casting membrane 24a and the outlet of the air knife is in a range of 10 *µ*m to 10cm, more preferably 100 *µ*m to 5cm, and most preferably 500 *µ*m to 1cm. It is preferable to install the air knife and a backup roll on opposite sides of the transportation passage of the casting membrane 24. The backup roll supports the casting membrane 24a so as to stabilize the clearance setting and reduce the flutters, wrinkles and deformations of the casting membrane 24a.

The casting membrane 24a which passed through the first water remover 415 is transported to the peel roller 123. The peel roller 123 peels off the casting membrane 24a from the web 111 as the membrane 410 and transport the membrane 410 to the tenter device 64. In the tenter device 64, the membrane 410 is dried until the remaining solvent reaches the predetermined value. Thereafter, the membrane 410 is transported to the edge slitting device 67.

In a second liquid bath 420 in which the second liquid 66a is stored, guide rollers 420b are provided. The membrane 410 whose side edges have been cut off and removed by the edge slitting device 67 is transported to the second liquid bath 420 by the guide rollers 420b, immersed into the second liquid 66a and transported out of the second liquid bath 420. Thus, the solvent substitution is performed by contacting the membrane 410 to the second liquid 66a. Thereafter, the membrane 410 is transported to a second water remover 425. The second water remover 425 has the same structure as that of the first water remover 415 and is used for removing the water from the surface of the membrane 410. The membrane 410 which passed the second water remover 425 is transported to the drying chamber 69. In the drying chamber 69, the dry air is blown onto the membrane 410 to dry the membrane 410 while the membrane 410 is being transported. As described above, the time for drying the membrane 410 in the tenter device 64 and the drying chamber 69, that is, the time for removing the organic solvent contained in the membrane 410 is shortened by the solvent substitution through the first and second liquids 65a, 66a.

In the present invention, as described above, the casting membrane or the membrane is dried before the solvent substitution by the contact of the poor solvent of the solid electrolyte to reduce the remaining solvent amount in the casting membrane to the predetermined value. Thereby, during the solvent substitution, formation of pores in the casting membrane or in the membrane is prevented. Thus, it becomes possible to obtain the solid electrolyte membrane with very little defects.

In chemical formula 1, if X is a polymer which is a cation species without the hydrogen atom, that is, the precursor of the solid electrolyte, it is possible to perform acid processing during the above-mentioned producing method of the solid electrolyte membrane. In the acid processing, proton substitution is performed by contacting the precursor membrane to the solution containing acid which is a proton-donating substituent. Thereby, the solid electrolyte is generated from the precursor in the precursor membrane. Thus, the solid electrolyte membrane is produced from the precursor membrane by the proton substitution. Note that the proton substitution in the present invention is to substitute the hydrogen atom for the cationic species other than the hydrogen atom(s) H in the polymer.

In the acid processing, to perform the proton substitution in the precursor membrane with a high degree of efficiency, the remaining solvent in the precursor membrane is preferably in a range of 1 wt.% to 100 wt.% (dry measure). If the drying is continued until the remaining solvent achieves less than 1 wt.%, the drying time becomes too long which is not preferable. If the acid processing is performed to the precursor membrane containing the remaining solvent exceeding 100 wt.% (dry measure), a percentage of voids becomes too large which is not preferable.

After the proton substitution, it is preferable to perform a washing process to remove the solution containing acid which is not used for substituting hydrogen atom(s) for cationic species from the membrane. Thereby, it becomes possible to prevent the polymer constituting the solid electrolyte membrane from being contaminated by the remaining acid.

As a method for washing the membrane after the acid processing, it is preferable to immerse the membrane in the water. However, the method is not particularly limited to the above as long as the acid is removed by contacting the membrane to the water. For instance, it is also possible to coat or spray the water onto the surface of the solid electrolyte membrane. Such methods are applicable while the membrane is being transported continuously without reducing the productivity thereof.

Water can be sprayed by a method using an extrusion or a coating head (a fountain coater, or a frog mouth coater) or a method of using a spray nozzle which is used for humidification of air, painting, and automatic washing of a tank. The above spraying methods disclosed in "All about coating", edited by Masayoshi Araki, published by Converting Technology Institute, Ltd., 1999 are also applicable to the present invention. Further, as the spray nozzle, a plurality of conical or sector spray nozzles manufactured by Ikeuchi Co., Ltd. or Spraying Systems Co., Ltd. can be arranged along a thickness direction of the solid electrolyte membrane so as to hit the water stream to the entire width of the membrane.

The higher the velocity of spraying water, the higher washing effect is obtained. However, if the solid electrolyte membrane is washed during the continuous transportation, the transportation stability may be reduced. For that reason, it is preferable to spray the water at a velocity of 50 cm/s to 1000 cm/s, more preferably 100 cm/s to 700 cm/s, and most preferably 100 cm/s to 500 cm/s.

The amount of water to be used in washing should be larger than that calculated based on a theoretical dilution ratio defined below. The theoretical dilution rate is calculated by (an amount of the water applied for washing [ml/m²])/ (the contact amount of solution containing the acid [ml/m²]). The theoretical dilution rate is defined on the assumption that the whole amount of water for washing contributes to dilution of the contact solution containing the acid. Actually, since the whole amount of water does not contribute to form a mixture, a larger amount of water than that derived from the theoretical dilution rate is used in practice. The amount of water varies depending upon the acid concentration of the solution used, additives, and type of the solvent; however, water is used in an amount providing a dilution rate of at least 100 to 1000 times, preferably 500 to 10,000 times, more preferably 1,000 to 100,000 times.

When a predetermined amount of water is used for washing, it is preferable to divide the predetermined amount of water into several portions and wash a polymer membrane several times rather than to use the whole amount of water at one time. The washing effect increases as the number of washings increases. However, if the membrane is washed for too many times, the problems may arise in terms of space and cost for installing washing devices. For that reason, the number of washings is preferably two to ten times. However, it is possible to obtain preferable washing effect only by washing the membrane for two to five times. In this case, an appropriate time intervals and distances are preferably provided between the washing devices so as to diffuse the water on the membrane to dilute the solution containing the acid. Further, it is preferable to incline the solid electrolyte membrane being transported such that the water flows over the membrane surface so as to diffuse the water for diluting the water and the solution containing acid. The most preferable method is to remove the water from the surface of the solid electrolyte membrane by providing the water remover between the washing devices. As the washing device, the aforementioned first and second water removers 415, 425 are used.

The above acid processing and washing are performed between a process after the formation of the casting membrane and a process for obtaining the membrane product. For instance, a first tank and a second tank are provided in the downstream from the casting device and between the casting chamber and the tenter device. The solution containing the acid is stored in the first tank. Water is stored in the second tank. The casting membrane being dried is transported to the first tank for the acid processing and then to the second tank for washing. The casting membrane is transported to each tank while being supported by the support, or after the casting membrane is peeled off from the support. After the washing, it is preferable to remove the water from the surface of the casting membrane or the membrane by using the water remover. The water remover is not particularly limited. It is possible to use aforementioned water removers.

In the above embodiment, two liquid baths are installed in tandem. However, it is also possible to provide another process such as the drying process between the first and second liquid bath. To contact the membrane to the solution, in addition to immersing the membrane in the liquid bath(s), spraying, coating and other methods may be used. A single solvent or a mixture of two or more solvents is used for preparing an optimum solution for contacting the membrane depending on the organic solvent used for the membrane production. The organic solvent is more securely removed from the membrane by performing the solution contact process for several times.

In the present invention, to cast the dope 24, a simultaneous casting method in which two or more sorts of the dopes are simultaneously cast, or a sequentially casting method in which two or more sorts of the dopes are sequentially cast is used. When the simultaneous co-casting is performed, the casting die with a feed block or a multi-manifold type casting die can be used. In the multi-layer membrane produced by the co-casting method, the thickness of at least one of the layers on the support side and on its opposite side is preferably in a range of 0.5% to 30% to the total thickness of the multi-layer membrane. Furthermore, in the co-casting method, when the dopes are cast onto the support, it is preferable to adjust the viscosity of each dope such that the lower viscosity dope entirely covers over the higher viscosity dope(s). Furthermore, in the co-casing method, when the dopes are cast onto the support, it is preferable that the inner dope is covered with dope(s) whose ratio of the poor solvent is higher than the inner dope.

The solid electrolyte membrane produced by the invention is suitably used for the fuel cell, in particular, for the proton conductive membrane in a direct methanol full cell. In addition, the solid electrolyte membrane is used as a component of the fuel cell interposed between the two electrodes of the fuel cell. Further, the solid electrolyte membrane is used for the electrolyte in various batteries or cells such as a redox flow battery and the lithium battery, a display element, an electrochemical sensor, a signal transmission medium, a capacitor, electrodialysis, electrolyte membrane for electrolysis, a gel actuator, salt electrolyte membrane and proton exchange membrane.

### (Fuel Cell)

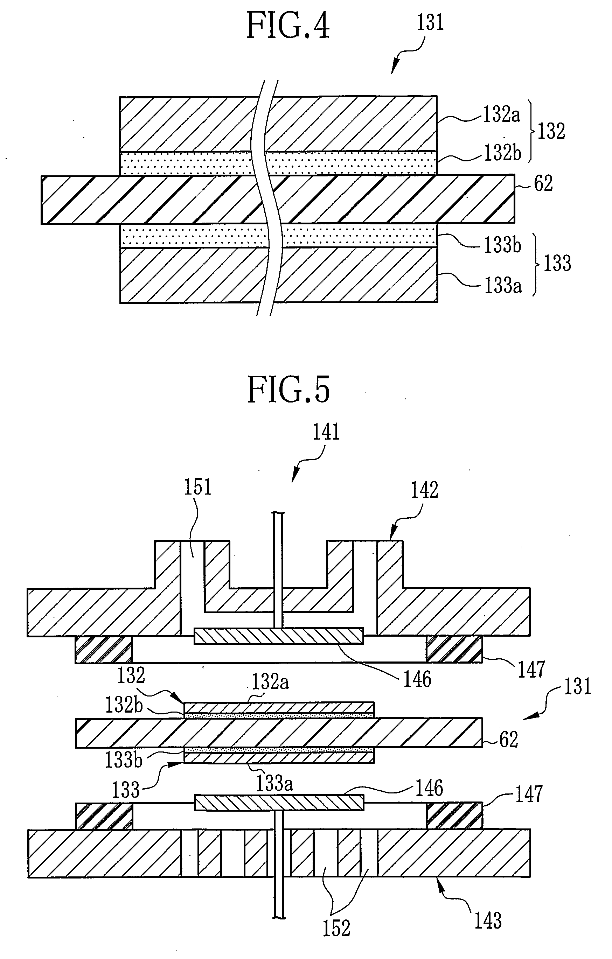

In the following, an example of using the solid electrolyte membrane in a membrane electrode assembly, hereinafter referred to as MEA), and an example of using the MEA in the fuel cell are described. Fig. 4 is a section view illustrating a configuration of the MEA. An MEA 131 is constituted of the membrane 62, and an anode 132 and cathode 133 placed opposite to each other. The membrane 62 is interposed between the anode 132 and the cathode 133.

The anode 132 is constituted of a porous conductive sheet 132a and a catalyst layer 132b contacting the membrane 62. The cathode 133 is constituted of a porous conductive sheet 133a and a catalyst layer 133b contacting the membrane 62. As the porous conductive sheets 132a, 133a, carbon paper and the like are used. The catalyst layers 132b, 133b are formed of a dispersion in which carbon particles are dispersed into the proton conductive material. The carbon particles support a catalyst metal thereon such as platinum. As the carbon particles, there are ketjen black, acetylene black, carbon nanotubes. As the proton conductive material, for instance, Nafion is used.

The following methods are preferably applied for producing the MEA 131:
(1) Proton conductive material coating method: a catalyst paste (ink) containing a carbon supporting active metal, a proton conductive material and a solvent is directly coated on both surfaces of the membrane 62, and porous conductive sheets 132a, 133a are thermally adhered under pressure thereto to construct a 5-layered MEA.
(2) Porous conductive sheet coating method: A liquid including the material for the catalyst layer 132b, 133b, for instance, the catalyst paste is applied onto the surface of the porous conductive sheets 132a and 133a to form a catalyst layer thereon, and a solid electrolytic membrane 62 is adhered thereto under pressure to construct a 5-layered MEA.
(3) Decal method: The catalyst paste is applied onto PTFE to form catalyst layers 132b, 133b thereon, and the catalyst layers 132b, 133b alone are transferred to a solid electrolytic membrane to construct a 3-layered structure. A porous conductive sheet is adhered thereto under pressure to construct a 5-layered MEA.
(4)Catalyst post-attachment method: Ink prepared by mixing a carbon material not supporting platinum powder and a proton conductive material is applied or cast onto a membrane 63, porous conductive sheet 132a and 133a or PTFE to form a membrane. Thereafter, the membrane 62 is immersed into a liquid containing platinum ion so as to reduce and precipitate the platinum particles in the membrane 62 to form the catalyst layers 132b, 133b. After the catalyst layers 132b and 133b are formed, the MEA 131 is produced by one of the above methods (1)-(3).
(5) Others: A coating liquid containing materials of the catalyst layers 132b, 133b is previously prepared. The coating liquid is applied onto the support (or the web) and dried. The supports (or the webs) on which the catalyst layers 132b, 133b are formed are thermally adhered to both surfaces of the membrane 62 such that the catalyst layers 132b and 133b contact the membrane 62. After peeling the supports (or the webs), the membrane 62 interposed by the catalyst layers 132b and 133b is sandwiched between the porous conductive sheets 132a and 133a. Thus, the catalyst layers 132b, 133b are airtightly adhered the membrane to produce the MEA 131.

Fig. 5 is an exploded section view illustrating a configuration of the fuel cell. The fuel cell 141 is constituted of the MEA 131, a pair of separators 142, 143 for sandwiching the MEA 131, current collectors 146 which are formed of stainless nets attached to the separators 142, 143, and a gaskets 147. The anode-side separator 142 has an anode-side opening 143 formed through it; and the cathode-side separator 142 has a cathode-side opening 152 formed therethrough. Vapor fuel such as hydrogen or alcohol (e.g. , methanol) or liquid fuel such as aqueous alcohol solution is fed to the cell via the anode-side opening 151; and an oxidizing gas such as oxygen gas or air is fed therethrough via the cathode-side opening 152.

For the anode 132 and the cathode 133, for example, a catalyst that supports active metal particles of platinum on a carbon material may be used. The particle size of the active metal particles generally used is in a range of 2 nm to 10 nm. Active metal particles having a smaller particle size may have a large surface area per the unit mass thereof, and are therefore advantageous since their activity is higher. If too small, however, the particles are difficult to disperse with no aggregation, and it is said that the lowermost limit of the particle size is 2 nm or so.

In hydrogen-oxygen fuel cells, the active polarization of cathode (air electrode) is higher than that of anode (hydrogen electrode). This is because the cathode reaction (oxygen reduction) is slow as compared with the anode reaction. For enhancing the oxygen electrode activity, usable are various platinum-based binary alloys such as Pt-Cr, Pt-Ni, Pt-Co, Pt-Cu, Pt-Fe. In a direct methanol fuel cell in which methanol aqueous solution is used for the anode fuel, it is a matter of importance that the catalyst poisoning with CO that is formed during methanol oxidation must be inhibited. For this purpose, usable are platinum-based binary alloys such as Pt-Ru, Pt-Fe, Pt-Ni, Pt-Co, Pt-Mo, and platinum-based ternary alloys such as Pt-Ru-Mo, Pt-Ru-W, Pt-Ru-Co, Pt-Ru-Fe, Pt-Ru-Ni, Pt-Ru-Cu, Pt--Ru--Sn, Pt-Ru-Au. As the carbon material for supporting the active metal, acetylene black, Vulcan XC-72, ketjen black, carbon nanohorn (CNH), and carbon nanotube (CNT) are preferably used.

The catalyst layer 132b, 133b have following functions: (1) transporting fuel to active metal, (2) providing the reaction site for oxidation of fuel (anode) or for reduction thereof (cathode), (3) transmitting the electrons released by the redox reaction to the current collector 146, and (4) transporting the protons generated in the reaction to solid electrolytic membrane. For (1), the catalyst layers 132b, 133b must be porous so that liquid and vapor fuel may penetrate the pores. The active metal catalyst supported by the carbon material works for (2); and the carbon material also works for (3). For attaining the function of (4), a proton conductive material is mixed into the catalyst layers 132b, 133b. The proton conductive material mixed in the catalyst layers 132, 133b is not particularly limited provided that it is a solid that has a proton-donating group. Polymer compounds having acid-residue used for the membrane 62, for instance, perfluorosulfonic acids such as typically Nafion; phosphoric acid-branched poly(meth)acrylates; sulfonated, heat-resistant aromatic polymers such as sulfonated polyether-ether ketones, sulfonated polybenzimidazoles are preferably used. If the material of the membrane 62, that is, the solid electrolyte is used for the material of the catalyst layers 132b, 133b, the catalyst layers 132b, 133b and the membrane 62 are made of the material of the same type. For that reason, the electrochemical contact between the solid electrolytic membrane and the catalyst layer becomes high, which is more advantageous in view of the proton conduction. The amount of the active metal is preferably from 0.03 to 10 mg/cm² in view of cell output and the cost efficiency. The amount of the carbon material that supports the active metal is preferably from 1 to 10 times the mass of the active metal. The amount of the solid electrolyte is preferably from 0.1 to 0.7 times the mass of the active metal-supporting carbon.

The anode 132 and the cathode 133 serve to prevent interference in current collection and gas permeation due to water accumulation. The carbon papers and carbon fibers are commonly used for the anode 132 and the cathode 133. It is also possible to perform polytetrafluoroethylene (PTEF) processing to the carbon paper and carbon fibers for repelling the water.

The MEA is preferably incorporated in the battery. Sheet resistivity measured by an AC impedance method when the fuel is loaded is preferably 3 Ω cm² or less, more preferably 1 Ω cm² or less and most preferably 0.5 Ω cm² or less. The sheet resistivity is obtained by a product of an actually measured value and a sample area.

Fuel for the fuel cell is described. For anode fuel, hydrogen, alcohols (e.g., methanol, isopropanol, ethylene glycol), ethers (e.g., dimethyl ether, dimethoxymethane, trimethoxymethane), formic acid, boron hydride complexes, and ascorbic acid are used. For cathode fuel, oxygen (including oxygen in air), and hydrogen peroxide are used. For cathode fuel, oxygen (including oxygen in air), or hydrogen peroxide are used.

In direct methanol fuel cells, methanol aqueous solution having a methanol concentration of from 3 wt.% to 64 wt.% is used as the anode fuel. As in the anode reaction formula (CH₃OH + H₂O → CO₂ + 6H⁺ + 6e⁻), 1 mol of methanol requires 1 mol of water, and the methanol concentration in this case corresponds to 64 wt.%. A higher methanol concentration in fuel is more effective for reducing the weight and the volume of the cell including the fuel tank of the same energy capacity. However, if the methanol concentration is too high, then much methanol may penetrate through the solid electrolytic membrane to reach the cathode on which it react with oxygen to lower the voltage. This is a crossover phenomenon. When the methanol concentration is too high, the crossover phenomenon is remarkable which reduces the cell output. To prevent the above problem, the optimum concentration of methanol is determined depending on the methanol permeability through the solid electrolytic membrane. The cathode reaction formula in direct methanol fuel cells is (3/2) O₂ + 6H⁺ + 6e⁻ → H₂O, and oxygen (generally, oxygen in the air) is used as the fuel in the cells.

To supply the anode fuel and the cathode fuel to the corresponding catalyst layers 132b, 133b, there are two methods:
(1) a method of forcedly circulating the fuel by the use of an auxiliary device such as pump, that is, an active method, and
(2) a method not using such auxiliary device, that is, a passive method, for example, the liquid fuel is supplied through capillarity or by free-fall, and vapor fuel is supplied by exposing the catalyst layer to air. It is also possible to combine these methods. The method (1) has some advantages in that water formed in the cathode area is circulated, and high-concentration methanol is usable as fuel, and that air supply enables high output from the cells, while it is difficult to downsize the cell because a fuel supply unit is necessary. On the other hand, the method (2) enables to downsize the cells, while the fuel supply ratio is readily limited and high output from the cells is often difficult.

The unit cell voltage of fuel cells is generally at most 1 V. It is desirable to stack up the unit cells in series, depending on the necessary voltage for load. As methods for stacking, plane stacking in which unit cells are arranged on a plane, and bipolar stacking in which unit cells are stacked up via a separator with a fuel passage formed on both sides thereof are used. In the plane stacking, the cathode (air electrode) is on the surface of the stacked structure so that it is easy to take in air and realizes a thin structure. Accordingly, the plane stacking is suitable for small-sized fuel cells. In addition, it is also possible to apply MEMS technology, in which a silicon wafer is processed to form a micropattern thereon and fuel cells are stacked on it.

Fuel cells are used in various appliances, for example, for automobiles, electric and electronic appliances for household use, mobile devices and the like. In particular, direct methanol fuel cells enable downsizing, lightweight and do not require charging. Having such advantages, they are expected to be used for various energy sources for mobile appliances and portable appliances. For example, mobile appliances in which fuel cells are favorably used include mobile phones, mobile notebook-size personal computers, electronic still cameras, PDA, video cameras, mobile game drivers, mobile servers, wearable personal computers, mobile displays and so forth. The portable appliances in which fuel cells are favorably used include portable generators, outdoor lighting devices, pocket lamps, electrically-powered (or assisted) bicycles and so forth. In addition, fuel cells are also favorable for power sources for robots for industrial and household use and for other toys. Moreover, they are further usable as power sources for charging secondary batteries that are mounted on these appliances.

### [Embodiment 1] (Reference)

In the following examples, the example 1 is described in detail. With regard to examples 2-8, only the conditions which differ from those of the example 1 are described. The examples 1-8 are not examples of the present invention. Further, the examples 3, 4 are comparison experiments of the examples 1, 2.

A material A and a solvent are mixed in the following ratio to dissolve the material A in the solvent to obtain a solid electrolyte dope 24 of 20 wt.%. Hereinafter, the dope 24 is referred to as a dope A. The material A is sulfonated polyacrylonitrile butadiene styrene with the sulfonation degree of 35%.

| | |
|---|---|
| Material A | 100 pts. wt. |
| Solvent: N, N-dimethylformamide | 400 pts. wt. |

The material A is prepared by the following synthesis.

### (1) Synthesis of 4-(4-(4-pentylcyclohexyl)phenoxymethyl) styrene

A substance of the following composition is reacted for 7 hours at the temperature of 100°C. Thereafter, the obtained liquid is cooled to the room temperature. Water is added thereto to crystallize 4-(4-(4-pentylcyclohexyl) phenoxymethyl) styrene. The liquid containing the crystal of 4-(4-(4-pentylcyclohexyl) phenoxymethyl) styrene is filtered. Then, the crystal is washed by an aqueous solution containing water and acetonitrile at a ratio of 1 to 1. Thereafter, 4-(4-(4-pentylcyclohexyl) phenoxymethyl) styrene is dried by the air.

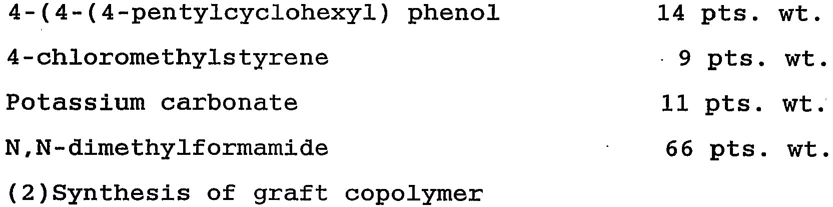

A substance of the following composition is heated up to 60° C.

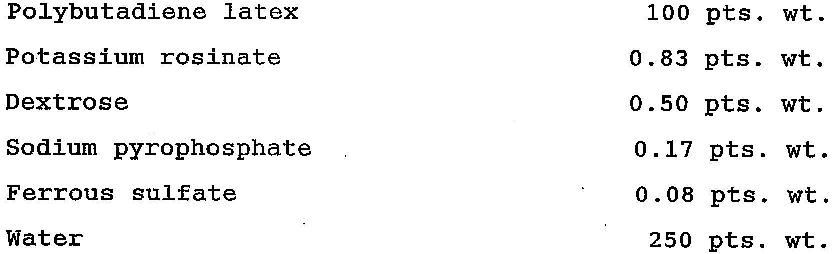

Polymerization is performed by dropping a mixture of the following composition onto the mixture of the above composition for 60 minutes.

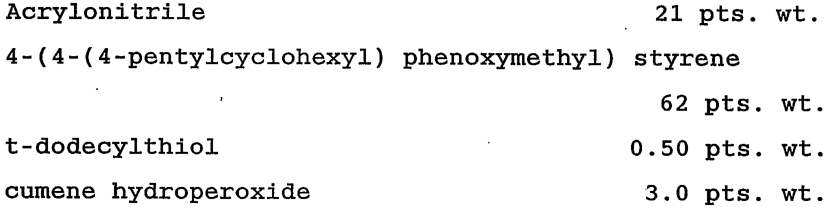

After the dropping, 0.2 pts. wt. of cumene hydroperoxide is added to the above, and cooled for one hour. Thereby, latex is obtained. The obtained latex is put into 1% sulfuric acid at the temperature of 60° C, and then, the temperature is increased to 90° C to coagulate the latex. The coagulated latex is properly washed and dried to obtain the graft copolymer.

### (3) synthesis of the material A by sulfonating the graft copolymer

The graft copolymer (100 pts. wt.) obtained in the process (2) is dissolved in dichloromethane (1300 pts. wt.). While the temperature of the obtained liquid is kept 0°C or below, concentrated sulfuric acid (13 pts. wt.) is slowly added thereto. Thereafter, the liquid is stirred for 6 hours to form precipitates. The precipitates are dried after the solvent is removed to obtain sulfonated polyacrylonitorile butadiene styrene, that is, the material A used as the solid electrolyte. The percentage of introduction of the sulfonic acid group is 35% measured by titration. A dope A is formed of the material A which is the solid electrolyte, and the solvent which is N, N-dimethylformamide.

### [Production of solid electrolyte membrane]

The dope A is cast from the casting die 81 to the belt 82 being transported to form the casting membrane. The dry air at the temperature in a range of 80° C -120° C is blown onto the casting membrane by using the air blowers 91-93 until the remaining solvent percentage reaches 30 wt. % with respect to the solid component, that is, the solid electrolyte contained in the dope A. At the time the casting membrane obtains the self-supporting property, the casting membrane is peeled off as the membrane from the belt 82. The membrane is transported to the tenter device 64, and is transported through the tenter device 64 while the both edges of the membrane are held by the clips 64a. In the tenter device 64, the membrane is dried by the dry air at the temperature of 140°C until the remaining solvent percentage reaches 15 wt.% with respect to the solid component. At the exit of the tenter device 64, the clips 64a release the side edges of the membrane. Thereafter, the side edges of the membrane are cut off by the edge slitting device 67. Then, during the transportation, the membrane is immersed in the first and second liquids 65a, 66a in the first and second liquid baths 65, 66 to sufficiently substitute N, N-dimethylformamide. The first and second liquids contain water and methanol at the ratio of 1 to 1 whose temperature is kept at 60° C. The membrane is taken out from the liquid 66a, transported to the drying chamber 69 and dried at the temperature of 100° C -160° C while the membrane is transported by the rollers 68. Thus, the solid electrolyte membrane is obtained.

The following evaluation is performed to the obtained membrane. The result of the evaluation is shown in table 1. The numerals of the evaluation items in table 1 correspond to the numerals assigned to the following evaluation items.

### 1. Thickness

The membrane thickness is continuously measured at the velocity
of 600mm/min by using the electronic micrometer produced by Anritsu Corporation Ltd. The data obtained by the measurement is recorded on a chart sheet with a 1/20 scale at the velocity of 30mm/min. The data curves are measured by using a ruler. According to the measured value, average thickness and variations in thickness with respect to the average thickness are obtained. In table 1, (a) is average thickness (unit: *µ*m), (b) is the variation in thickness (unit: *µ*m) with respect to (a).

### 2. Measurement of remaining solvent amount

Membrane is cut at 7mm x 35mm. The remaining solvent amount in the cut membrane is measured by gas chromatography using GC-18A produced by Shimadzu Co., Ltd.

### 3. Measurement of Proton Conductivity

Ten measurement points are selected at intervals of 1m along a lengthwise direction of the obtained solid electrolyte membrane. Each of ten measurement points is punched out as a disc-shaped sample with a diameter of 13mm. Each sample is interposed by two stainless steel plates and the proton conductivity thereof is measured by AC impedance method using 1470 and 1255B produced by Solartron Co., Ltd. The measurement is performed at 80° C, and relative humidity of 95%. The proton conductivity is indicated by AC impedance value (unit: S/cm) shown in table 1.

### 4. Power density of the fuel cell 141

A fuel cell 141 is produced by using the membrane, and the output thereof is measured. The producing method and the measurement method of the power density of the fuel cell 141 are described in the following.
0159

### (1) Formation of catalyst sheet A used as the catalyst layers 132b, 133b

2 g of platinum-supporting carbon is mixed with 15 g of the solid electrolyte (5% DMF solution), and dispersed for 30 minutes by using an ultrasonic disperser. The average particle diameter of the resulting dispersion is about 500 nm. The dispersion is applied onto the carbon paper with a thickness of 350 *µ*m and dried. Thereafter, a disc-shape with a diameter of 9 mm is punched out of the carbon paper. Thus, the catalyst sheet A is formed. Note that the above platinum supporting carbon is Vulcan XC72 with 50 wt.% platinum. The solid electrolyte is the same as that in the membrane production.

### (2) Formation of MEA 131

The catalyst sheet A is attached to both surfaces of the solid electrolyte membrane 62 and heat-pressed at 80° C under 3MPa for 2 minutes. Thus, the MEA 131 is formed.

### (3) Power density of fuel cell 141

The MEA 131 obtained in the above process (2) is set in the fuel cell shown in Fig. 5. An aqueous 15 wt. % methanol solution is put into the fuel cell through an anode-side opening 151. At this time, a cathode-side opening 152 is kept open to air. The anode 132 and the cathode 133 are connected via a multi-channel battery test system produced by Solartron Co. , Ltd. to measure the power density (the unit: W/cm²).

### [Example 2] (Reference)

The material B and the solvent are mixed by the following composition to dissolve the material B in the solvent to produce 20 wt.% of the solid electrolyte dope 24. Hereinafter, the dope 24 is referred to as a dope B. Note that the material B is (surfopropylated polyethersulfone) with the sufonation degree of 35% which is synthesized according to synthesizing method disclosed in Japanese Patent Laid-Open Publication No. 2002-110174.

| | |
|---|---|
| Material B | 100 pts. wt. |
| Solvent: N-methyl | 400 pts. wt. |

### [Production of solid electrolyte membrane]

The solid electrolyte membrane is obtained in the same conditions as those in the example 1 except that the dope B is used, the temperatures of air from the air blowers 91-93 are set at 80° C -140° C, and the temperature of the drying chamber 69 is set at 100°C -160°C. The test results will be shown in table 1 below.

### [Example 3] (Comparative)

In the Example 1, the solid electrolyte membrane is obtained in the same conditions as those in the example 1 except that the membrane whose side edges are removed is transported to the drying chamber 69 without immersing the membrane in the aqueous solution containing water and methanol at 1:1 kept at 60° C.

### [Example 4] (Comparative)

In the example 2, the solid electrolyte membrane is obtained in the same conditions as those in the example 2 except that the membrane whose side edges are removed is transported to the drying chamber 69 without immersing the membrane in the aqueous solution containing water and methanol at 1:1 kept at 60° C.

### [Example 5] (Comparative)

In this example, the compound shown in chemical formula 1 is used as the solid electrolyte. The proton substitution, that is, the acid processing to obtain the compound of the chemical formula 1 is performed in the membrane production process as described below instead of prior to the dope production. A substance preceding the proton substitution to obtain the compound of the chemical formula 1, that is, the precursor of the solid electrolyte is referred to as a material D. The material D is dissolved in the solvent to form the dope for casting. The dope is formed in the same manner as the dope 24 in the Example 1. The solvent is a mixture of a solvent component 1 which is a good solvent of the material D and a solvent component 2 which is a poor solvent of the material D. In this example, the chemical formula 1 with the following composition is used: X is Na, Y is SO₂, Z is (I) of the chemical formula 2, n is 0.33, m is 0.67, the number average molecular weight Mn is 61000, and the weight average molecular weight Mw is 159000.

| | |
|---|---|
| The material D | 100 pts. wt. |
| Solvent component 1 (dimethyl sulfoxide) | 256 pts. wt. |
| Solvent component 2 (methanol) | 171 pts. wt. |

Polyethylene terephthalate is used as the web. The PET film has a long belt-like shape and is continuously transported. The air at 45°C with 10%RH is blown onto the casting membrane formed on the web for 30 minutes. The casting membrane is transported to a bath in which water at 30° C is stored. In the bath, the casting membrane is peeled off from the web. Thereafter, the peeled membrane is referred to as a precursor membrane since this precursor membrane is formed of the material D. The casting membrane and the precursor membrane are immersed in water for 5 minutes.

Next, after the immersion in the bath, the water is removed by using the air knife from the surface of the precursor membrane. The precursor membrane is transported to the tenter device 64. In the tenter device 64, the precursor membrane is dried by the dry air at 120° C such that the percentage of the solvent content is less than 10 wt.% with respect to the weight of the solid content. The precursor membrane is dried in the tenter device 64 for ten minutes. The precursor membrane is released from the clips 64a at the outlet of the tenter device 64. The side edges of the precursor membrane held by the clips 64a are cut off and removed by the edge slitting device 67 disposed in the downstream from the tenter device 64.

The acid processing is performed to the precursor membrane whose side edges are cut off, and then the washing process is carried out. The acid processing is to (immerse) the precursor membrane in the aqueous acid solution. In the present example, the aqueous acid solution is continuously supplied the liquid bath and the precursor membrane is immersed in the aqueous acid solution for the acid processing. Thereby, the structure of the material D becomes that shown in the chemical formula 1. After the acid processing, the membrane is washed with water. Thereafter, the membrane is transported to the drying chamber 69 and dried at 120°C -185°C.

### [Example 6] (Comparative)

The material D of the precursor of the solid electrolyte in the example 5 is changed to a material E. In this example, the material E is the chemical formula 1 with the following composition is used: X is Na, Y is SO₂, Z is (I) and (II) of the chemical formula 2, n is 0.33, m is 0.67, the number average molecular weight Mn is 68000, and the weight average molecular weight Mw is 200000. In the chemical formula 2, (I) is 0.7 mol.% and (II) is 0.3 mol%. The solvent is a mixture of a solvent component 1 which is a good solvent of the material E, and a solvent component 2 which is a poor solvent of the material E. Other conditions of the membrane production are the same as those in the example 5.

| | |
|---|---|
| Material E | 100 pts. wt. |
| Solvent component 1 (dimethyl sulfoxide) | 200 pts. wt. |
| Solvent component 2 (methanol) | 135 pts. wt. |

### [Example 7] (Comparative)

The membrane is produced in the same manner as the example 5. Note that in the example 7, the precursor membrane is obtained by peeling the casting membrane from the PET film after the immersion. The remaining water on the (precursor) membrane is removed after the immersion of the membrane in the water at 30° C for 5 minutes after the washing process.

### [Example 8] (Comparative)

The membrane is produced in the same manner as the example 7 except that the material D of the precursor of the solid electrolyte is changed to the material E.

Evaluations are performed to the membranes obtained in the examples 1 to 8. The results of the evaluations are shown in Table 1. Note that the number of each evaluation items in the table 1 corresponds to that assigned to each evaluation item.

**[Table 1]**

| | Evaluation Item | | | | |
|---|---|---|---|---|---|
| | 1 (µm) | | 2 (wt.%. | 3 (S/cm) | 4 (W/cm²) |
| | (a) | (b) | | | |
| Example 1 | 53 | ±1.5 | 0.8 | 0.08-0.09 | 0.44-0.48 |
| Example 2 | 54 | ±1.5 | 0.7 | 0.10-0.11 | 0.50-0.54 |
| Example 3 | 52 | ±1.6 | 3.2 | 0.03-0.04 | 0.21-0.24 |
| Example 4 | 51 | ±1.4 | 3.0 | 0.04-0.05 | 0.22-0.27 |
| Example 5 | 52 | ±1.3 | 0.7 | 0.11-0.12 | 0.51-0.55 |
| Example 6 | 53 | ±1.5 | 0.6 | 0.11-0.12 | 0.52-0.55 |
| Example 7 | 54 | ±1.5 | 0.5 | 0.12-0.13 | 0.53-0.56 |
| Example 8 | 54 | ±1.3 | 0.5 | 0.13-0.14 | 0.53-0.55 |

According to the above results, the examples 5-8 enable to securely remove the remaining solvent compared to the comparison examples 3 and 4. Thus, the remaining solvent amount in the solid electrolyte membrane is reduced. In particular, in the examples 5-8, the effect is apparent. That is, the solid electrolyte membrane produced exerts the excellent ion conductivity. Accordingly, the solid electrolyte membrane obtained is suitable for the solid electrolyte membrane in the fuel cell.

### Industrial Applicability

The solid electrolyte membrane produced according to the present invention is applicable to the power sources for various mobile appliances and various portable appliances.

## Claims

1. A method for producing a solid electrolyte membrane comprising the steps of:
(A) forming a casting membrane by casting a dope containing a solid electrolyte and an organic solvent onto a moving support;
(B) peeling said casting membrane from said support as a wet membrane containing said organic solvent;
(C) contacting said wet membrane with a liquid which is a poor solvent of said solid electrolyte and having a lower boiling point than that of said organic solvent, said poor solvent being selected from a lower alcohol having 1 to 5 carbons, methyl acetate and acetone so that no pores are formed in the membrane; and
(D) drying said wet membrane to form a solid electrolyte membrane;
wherein said organic solvent is a mixture of a first component which is a poor solvent of said solid electrolyte, and a second component which is a good solvent of said solid electrolyte, wherein the poor solvent is selected from a lower alcohol having 1 to 5 carbons, methyl acetate or acetone and the good solvent is selected from N-dimethylformamide (DMF), N,N'-dimethylacetamide (DMAc), dimethyl sulfoxide (DMSO) or N-methylpyrrolidone (NMP),
wherein the weight ratio of said first component to said organic solvent is not less than 10% and less than 100%, and
wherein said step (C) is performed multiple times before said step (D) by immersing said wet membrane in said liquid, wherein the liquid in the second step (C) includes a compound having a lower boiling point than that of the liquid in the first step (C) and wherein said liquids are stored in liquid baths and the temperatures of the liquids in the first and second steps (C) are controlled in the range of 10 to 80°C.

2. The method of claim 1, wherein said wet membrane contacted with said liquid is dried for at least one time between said multiple steps (C).

3. The method of claim 1, wherein said first component includes alcohol having one to five carbons, and said second component includes DMSO.

4. The method of claim 1, wherein said solid electrolyte is a hydrocarbon polymer.

5. The method of claim 4, wherein said hydrocarbon polymer is an aromatic polymer having a sulfonic acid group.

6. The method of claim 5, wherein said aromatic polymer is a copolymer represented by general formulae (I), (II) and (III) 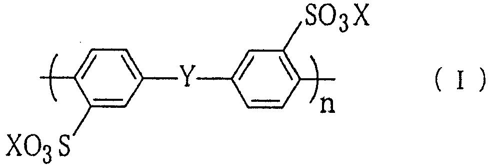 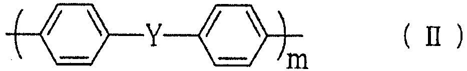 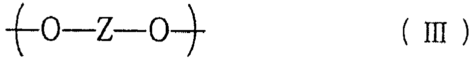 wherein X is H or a monovalent cation species, Y is SO₂, Z is a structure shown in (IV) or (V), and n and m satisfy 0.1 ≤ n/(m+n) ≤ 0.5

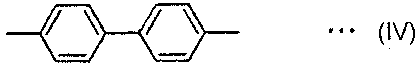

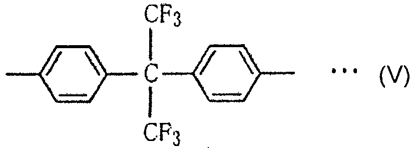

## Patentansprüche

1. Verfahren zum Herstellen einer Festelektrolytmembran umfassend die Schritte:
(A) Bilden einer Gußmembran durch Gießen einer Beschichtungsmasse, die einen Festelektrolyten und ein organisches Lösungsmittel enthält, auf einen sich bewegenden Träger;
(B) Abziehen der Gußmembran von dem Träger als eine feuchte Membran, die das organische Lösungsmittel enthält;
(C) Inkontaktbringen der feuchten Membran mit einer Flüssigkeit, welche ein schlechtes Lösungsmittel für den Festelektrolyten ist und einen niedrigeren Siedepunkt als den des organischen Lösungsmittels aufweist, wobei das schlechte Lösungsmittel ausgewählt ist aus einem niederen Alkohol mit 1 bis 5 Kohlenstoffatomen, Methylacetat und Aceton, so dass keine Poren in der Membran gebildet werden; und
(D) Trocknen der feuchten Membran, um eine Festelektrolytmembran zu bilden;
wobei das organische Lösungsmittel eine Mischung ist aus einer ersten Komponente, welche ein schlechtes Lösungsmittel für den Festelektrolyten ist, und einer zweiten Komponente, welche ein gutes Lösungsmittel für den Festelektrolyten ist, wobei das schlechte Lösungsmittel ausgewählt ist aus einem niederen Alkohol mit 1 bis 5 Kohlenstoffatomen, Methylacetat oder Aceton und das gute Lösungsmittel ausgewählt ist aus N-Dimethylformamid (DMF), N,N'-Dimethylacetamid (DMAc), Dimethylsulfoxid (DMSO) oder N-Methylpyrrolidon (NMP),
wobei das Gewichtsverhältnis der ersten Komponente zu dem organischen Lösungsmittel nicht weniger als 10 % und weniger als 100 % beträgt, und
wobei der Schritt (C) mehrmals vor dem Schritt (D) durch Eintauchen der feuchten Membran in die Flüssigkeit durchgeführt wird, wobei die Flüssigkeit in dem zweiten Schritt (C) eine Verbindung einschließt, die einen niedrigeren Siedepunkt als den der Flüssigkeit in dem ersten Schritt (C) aufweist, und wobei die Flüssigkeiten in Flüssigkeitsbädern aufbewahrt werden und die Temperaturen der Flüssigkeiten in den ersten und zweiten Schritten (C) in dem Bereich von 10 bis 80 °C geregelt werden.

2. Verfahren nach Anspruch 1, wobei die mit der Flüssigkeit in Kontakt gebrachte feuchte Membran wenigstens einmal zwischen den mehreren Schritten (C) getrocknet wird.

3. Verfahren nach Anspruch 1, wobei die erste Komponente einen Alkohol mit 1 bis 5 Kohlenstoffatomen einschließt und die zweite Komponente DMSO einschließt.

4. Verfahren nach Anspruch 1, wobei der Festelektrolyt ein Kohlenwasserstoffpolymer ist.

5. Verfahren nach Anspruch 4, wobei das Kohlenwasserstoffpolymer ein aromatisches Polymer mit einer Sulfonsäuregruppe ist.

6. Verfahren nach Anspruch 5, wobei das aromatische Polymer ein Copolymer ist, das durch die allgemeinen Formeln (I), (II) und (III) wiedergegeben ist 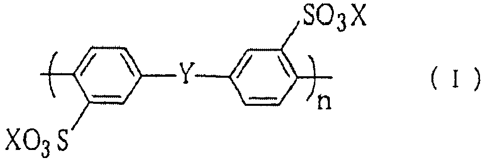 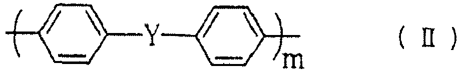 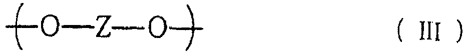 wobei X H oder eine einwertige Kationenspezies ist, Y SO₂ ist, Z eine in (IV) oder (V) gezeigte Struktur ist, und n und m 0,1 ≤ n/(m+n) ≤ 0,5 erfüllen

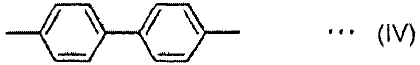

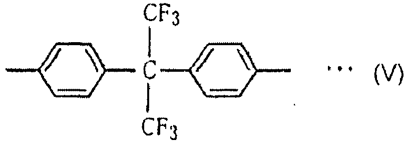

## Revendications

1. Procédé de production d'une membrane à électrolyte solide comprenant les étapes de :
(A) formation d'une membrane coulée en coulant une solution à filer contenant un électrolyte solide et un solvant organique sur un support en mouvement ;
(B) décollement de ladite membrane coulée dudit support sous la forme d'une membrane humide contenant ledit solvant organique ;
(C) mise en contact de ladite membrane humide avec un liquide qui est un solvant faible dudit électrolyte solide et ayant un point d'ébullition inférieur à celui dudit solvant organique, ledit solvant faible étant sélectionné parmi un alcool inférieur ayant de 1 à 5 atomes de carbone, l'acétate de méthyle et l'acétone afin qu'aucuns pores ne soient formés dans la membrane ; et
(D) séchage de ladite membrane humide pour former une membrane à électrolyte solide ;
où ledit solvant organique est un mélange d'un premier composant qui est un solvant faible dudit électrolyte solide, et d'un second composant qui est un solvant fort dudit électrolyte solide, où le solvant faible est sélectionné parmi les alcools inférieurs ayant de 1 à 5 atomes de carbone, l'acétate de méthyle ou l'acétone et le solvant fort est sélectionné parmi le N-diméthylformamide (DMF), le N,N'-diméthylacétamide (DMAc), le sulfoxyde de diméthyle (DMSO) ou la N-méthylpyrrolidone (NMP),
où le rapport en poids dudit premier composant audit solvant organique n'est pas inférieur à 10 % et est inférieur à 100 %, et
où ladite étape (C) est exécutée de multiple fois avant ladite étape (D) par immersion de ladite membrane humide dans ledit liquide, où le liquide dans la seconde étape (C) inclut un composé ayant un point d'ébullition inférieur à celui du liquide dans la première étape (C) et où lesdits liquides sont stockés dans des bains de liquide et les températures des liquides dans les première et seconde étapes (C) sont régulées dans la plage de 10 à 80°C.

2. Procédé selon la revendication 1, où ladite membrane humide mise en contact avec ledit liquide est séchée durant au moins une fois entre lesdites étapes multiple (C).

3. Procédé selon la revendication 1, où ledit premier composant comprend un alcool ayant de un à cinq atomes de carbone, et ledit second composant inclut du DMSO.

4. Procédé selon la revendication 1, où ledit électrolyte solide est un polymère hydrocarbure.

5. Procédé selon la revendication 4, où ledit polymère hydrocarbure est un polymère aromatique ayant un groupe acide sulfonique.

6. Procédé selon la revendication 5, où ledit polymère aromatique est un copolymère représenté par les formules générales (I), (II) et (III) 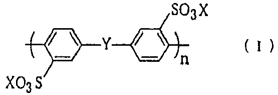 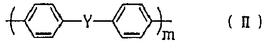 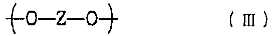 où X est H ou une espèce cationique monovalente, Y est SO₂, Z est une structure présentée en (IV) ou (V), et n et m satisfont l'équation 0,1 ≤ n/(m+n) ≤ 0,5
